# EUROPÄISCHE PATENTSCHRIFT

(11) **EP 3 775 815 B1**
(45) Veröffentlichungstag und Bekanntmachung des Hinweises auf die Patenterteilung: **07.05.2025**
(21) Anmeldenummer: 19711858.1
(22) Anmeldetag: 13.03.2019
(51) Int. Cl.: G01L 1/00, G01L 1/16, H02N 1/04

(54) **REIFEN UMFASSEND EINE VORRICHTUNG ZUM MESSEN EINER MECHANISCHEN KRAFT SOWIE DIE VERWENDUNG DER VORRICHTUNG**
PNEUMATIC TIRE COMPRISING A DEVICE FOR MEASURING A MECHANICAL FORCE AND USE OF THE DEVICE
PNEUMATIQUE COMPRENANT UN DISPOSITIF DE MESURE D'UNE FORCE MÉCANIQUE ET UTILISATION DU DISPOSITIF

(30) Priorität: 05.04.2018 IN 201841013069; 05.12.2018 DE 102018221053
(43) Veröffentlichungstag der Anmeldung: 17.02.2021
(73) Patentinhaber: Continental Reifen Deutschland GmbH, 30175 Hannover (DE)
(72) Erfinder: FINGER, Sebastian, 30419 Hannover (DE); LACAYO-PINEDA, Jorge, 30419 Hannover (DE); DAS, Amit, 30419 Hannover (DE); NATARAJAN, Tamil Selvan, 30419 Hannover (DE)
(74) Vertreter: Continental Corporation
(86) Internationale Anmeldenummer: PCT/EP2019/056209
(87) Internationale Veröffentlichungsnummer: WO 2019/192810

(56) Entgegenhaltungen:
- US-A1- 2015 222 204
- US-A1- 2017 234 745

## Beschreibung

Die Erfindung betrifft einen Reifen umfassend eine Vorrichtung, wobei die Vorrichtung eine erste, zweite, dritte, vierte und fünfte Schicht umfasst, wobei die dritte Schicht optional ist. Die Erfindung betrifft auch Verwendungen der Vorrichtung.

Sensoren spielen in der heutigen Automobilindustrie eine immer größere Rolle. Sie können nicht nur helfen die Materialeigenschaften bei der Herstellung oder bei dem Gebrauch verschiedener Autoteile zu überwachen, sondern bieten auch die Möglichkeit, Krafteinwirkungen wahrzunehmen, welche ohne sie nur schwer oder gar nicht wahrnehmbar wären. Dabei ist es oft notwendig, die Sensoren an verschiedenen Stellen im Auto anzubringen, um die Änderungen der Materialeigenschaften oder einwirkende Kräfte direkt an Ort und Stelle zu messen. Dabei kann auch die Größe der Sensoren eine Rolle spielen, welche möglichst gering ausfallen sollte, damit das Anbringen des Sensors keine zusätzlichen Probleme mit sich bringt.

Des Weiteren können Sensoren häufig nur mithilfe einer Stromquelle eingesetzt werden. Die Verbindung mit der Stromquelle und das Anbringen der Stromquelle an einer geeigneten Stelle erschweren die Installation eines Sensors an einer vorgesehenen Stelle zusätzlich.

Die US2017234745A1 offenbart einen flexiblen Sensor zur Überwachung von Betriebsparametern, einschließlich Druck und Temperatur, einer flexiblen Struktur, beispielsweise eines Reifens. Dieser verfügt über Elektroden und einen aktiven Bereich, die aus flexiblen Materialien bestehen.

Die US2015222204A1 beschreibt ein System zum Erzeugen von Strom für eine elektrische Unterbaugruppe eines Kraftfahrzeugs kann mindestens ein umgekehrtes Elektrobenetzungsenergiegewinnungselement umfassen, das mit einem Reifen des Kraftfahrzeugs gekoppelt ist.

Eine Aufgabe, die der Erfindung zugrunde liegt, besteht darin, eine Vorrichtung bereitzustellen, die es ermöglicht mechanische Kräfte in einem Reifen während der Fahrt zu messen, wie zum Beispiel Seitenkräfte oder Bremskräfte. Insbesondere sollte dies bevorzugt ohne Verwendung einer zusätzlichen Stromquelle gelingen und die Vorrichtung sollte besonders empfindlich sein. Zudem war es eine weitere Aufgabe, die der Erfindung zugrunde liegt, eine Vorrichtung zum Laden einer Energiequelle in einem Reifen oder einem Rad bereitzustellen.

Allgemein gelöst wird diese Aufgabe erfindungsgemäß durch eine Vorrichtung, dadurch gekennzeichnet, dass die Vorrichtung die folgenden Schichten umfasst
- eine erste Schicht umfassend ein erstes Elektrodenmaterial,
- eine weitere Schicht umfassend ein erstes Zwischenmaterial,
- eine weitere Schicht umfassend ein zweites Zwischenmaterial,
   und
- eine weitere umfassend ein zweites Elektrodenmaterial,
   wobei
   - das erste Zwischenmaterial und das zweite Zwischenmaterial unterschiedlich sind. Bevorzugt umfasst die Vorrichtung dabei Mittel zur Messung der Spannung zwischen der ersten und der fünften Schicht umfassend ein zweites Elektrodenmaterial oder zwischen der Schicht umfassend ein erstes Zwischenmaterial und der Schicht umfassend ein zweites Zwischenmaterial.

Im Rahmen der vorliegenden Erfindung ist der Ausdruck "die vier [...] Schichten gemäß der vorstehenden Reihenfolge übereinander angeordnet sind", dass die erste Schicht direkt auf der zweiten Schicht, die zweite direkt auf der vierten und die vierte direkt auf die fünfte Schicht angebracht ist, wobei zwischen diesen vier Schichten keine weiteren vorhanden sind. Dies gilt insbesondere für die nachstehend beschriebenen vier spezifischen Ausführungsformen der vorliegenden Erfindung.

Im Rahmen der vorliegenden Erfindung ist der Ausdruck "fünfte Schicht" lediglich als eine reine Nomenklatur dieser Schicht zu verstehen und nicht so zu verstehen, dass neben dieser fünften Schicht vier weitere Schichten vorliegen müssen. Das gleiche gilt für die zweite, dritte und vierte Schicht. Demnach können beispielsweise in einer erfindungsgemäßen Vorrichtung vier Schichten vorliegen, wobei die vier Schichten sich aus einer ersten, zweiten, vierten und fünften Schicht zusammensetzen. In diesem Sinne kann im Rahmen der gesamten vorliegenden Erfindung demnach die erste Schicht auch als Oberschicht, die zweite Schicht als Obermittelschicht, die dritte Schicht als Isolierschicht, die vierte Schicht als Untermittelschicht und die fünfte Schicht als Unterschicht bezeichnet werden. Dies gilt insbesondere für die nachstehend beschriebenen vier spezifischen Ausführungsformen der vorliegenden Erfindung.

Alle Vorteile der vorstehenden allgemeinen Lösung der Aufgabe werden nachstehend durch spezielle Ausführungsformen beschrieben und gelten mutatis mutandis für die vorstehende allgemeine Ausführungsform.

Gemäß Anspruch 1 wird diese Aufgabe gelöst durch einen Reifen umfassend eine Vorrichtung, wobei die Vorrichtung eine erste, zweite, dritte, vierte und fünfte Schicht umfasst, wobei die dritte Schicht optional ist, wobei
a) die erste Schicht ein erstes Elektrodenmaterial umfasst,
b) die zweite Schicht ein erstes Zwischenmaterial umfasst,
c) die dritte Schicht ein Isolationsmaterial umfasst,
d) die vierte Schicht ein zweites Zwischenmaterial umfasst,
   und
e) die fünfte Schicht ein zweites Elektrodenmaterial umfasst,
wobei
- das erste Zwischenmaterial der zweiten Schicht eine dielektrische Leitfähigkeit εᵣ von größer als 1,01 F m⁻¹ aufweist, und oder
- das zweite Zwischenmaterial der vierten Schicht eine dielektrische Leitfähigkeit εᵣ von größer als 1,01 F m⁻¹ aufweist,
dadurch gekennzeichnet, dass
- die zweite oder vierte Schicht eine Schichtdicke im Bereich von 10 bis 1000 µm aufweisen,
- das erste Zwischenmaterial der zweiten Schicht und das zweite Zwischenmaterial der vierten Schicht unterschiedlich sind
   und
- die vier oder fünf Schichten gemäß der vorstehenden Reihenfolge übereinander angeordnet sind.

Überraschenderweise wurde im Rahmen der vorliegenden Erfindung herausgefunden, dass bei der Reibung von zwei unterschiedlichen Zwischenmaterialien mit den vorstehend beschriebenen dielektrischen Leitfähigkeiten in der zweiten und vierten Schicht genügend Elektronen pro Fläche übertragen werden, damit beim Trennen dieser beiden aneinander geriebenen Zwischenmaterialien eine ausreichend große Spannung entsteht. Die entstandene Spannung kann dann ausgenutzt werden, um ein elektrisches Signal zu erzeugen. Dieses elektrische Signal kann genutzt werden, um die die ursprüngliche Reibung erzeugte Kraft zu messen oder gar zu quantifizieren. Im Rahmen der vorliegenden Erfindung umfassen die zweite bzw. die vierte Schicht einer erfindungsgemäßen Vorrichtung die jeweiligen Zwischenmaterialien, welche durch Kontakt und insbesondere durch Reibung aufgeladen werden können. Das Vorhandensein der ersten und zweiten Zwischenschicht, d.h. der zweiten und vierten Schicht einer erfindungsgemäßen Vorrichtung, bewirkt, dass größere Spannungen sowie Stromflüsse und somit auch größere Leistungen bei der Stromgewinnung oder eine empfindlichere Messvorrichtung beim Messen erreicht werden als bei vergleichbaren, nicht erfindungsgemäßen Vorrichtungen, bei denen nur eine Zwischenschicht zwischen den beiden Elektrodenmaterialien vorhanden ist.

Bevorzugt ist eine Vorrichtung wie vorstehend beschrieben, wobei die Vorrichtung
- dazu geeignet ist, eine mechanische Kraft zu messen
   und/oder
- dazu geeignet ist, eine elektrische Spannung zu erzeugen, und eine an einem den Reifen umfassenden Rad angebrachte oder an dem Reifen angebrachte Batterie und/oder Akkumulator elektrisch zu laden, wobei der Reifen bevorzugt ein nachstehend beschriebener erfindungsgemäßer Reifen ist.

Zudem kann im Rahmen der vorliegenden Erfindung auch optional eine dritte Schicht zwischen der zweiten und vierten Schicht vorhanden sein, welche so ausgelegt ist, dass die zweite und die vierte Schicht einer erfindungsgemäßen Vorrichtung in einem ersten Zustand voneinander getrennt und in einem zweiten Zustand miteinander in Kontakt treten können. Der zweite Zustand einer erfindungsgemäßen Vorrichtung kann dabei durch eine senkrecht zu den Schichten wirkende Kraft ausgelöst werden, die einen Kontakt zwischen der zweiten und der vierten Schicht einer erfindungsgemäßen Vorrichtung verursacht. Es ist daher ein entscheidender Beitrag der vorliegenden Erfindung, erkannt zu haben, dass bei Vorhandensein der dritten Schicht zwischen der zweiten und der vierten Schicht einer erfindungsgemäßen Vorrichtung wie vorstehend beschrieben oder wie vorstehend als bevorzugt beschrieben mehr Elektronen zwischen der zweiten und vierten Schicht übertragen werden können, um eine elektrische Spannung zwischen der zweiten und vierten Schicht nach Trennung deren Kontaktes zu erzeugen. Anschließend können die im zweiten Zustand übergegangenen Elektronen mittel Übergang in einen dritten Zustand der erfindungsgemäßen Vorrichtung getrennt gehalten werden. Die übergegangenen Elektronen führen zu einem Ladungsunterschied zwischen der zweiten und der vierten und damit folglich auch zwischen der ersten und der fünften Schicht der erfindungsgemäßen Vorrichtung. Der Spannungsunterschied zwischen der ersten und der fünften Schicht wird durch die übertragenen Elektronen induziert, während sich die vierte und die zweite Schicht nach Kontakt wieder voneinander entfernen. Durch die Anwesenheit einer dritten Schicht kann der Spanungsunterschied erhöht werden.

Es konnte gezeigt werden, dass durch eine geeignete Wahl der Schichtdicke der zweiten und/oder vierten Schicht, im nachfolgenden auch Quererstreckung der einer Schicht genannt, die in einer erfindungsgemäßen Vorrichtung erzeugte Spannung oder elektrische Leistung weiter erhöht werden konnte und daher auch ein noch empfindlicheres Messen von Kräften auf die erfindungsgemäße Vorrichtung erreicht werden konnte.

Die Spannung zwischen der ersten und der fünften Schicht der erfindungsgemäßen Vorrichtung kann mittels eines Spannungsmessers gemessen werden. Die erfindungsgemäße Vorrichtung umfasst daher bevorzugt auch einen Spannungsmesser zum Messen der Spannung zwischen der der zweiten und der vierten oder zwischen der ersten und der fünften Schicht der erfindungsgemäßen Vorrichtung.

Bevorzugt ist jedoch auch eine Vorrichtung wie vorstehend beschrieben oder wie vorstehend als bevorzugt beschrieben, eine Vorrichtung zum Messen einer mechanischen Kraft, umfassend eine Oberschicht, eine Obermittelschicht, eine Untermittelschicht und Untermittelschicht und keine dritte Schicht, dadurch gekennzeichnet, dass
- die Oberschicht ein erstes Elektrodenmaterial umfasst,
- die Obermittelschicht ein erstes Zwischenmaterial umfasst,
- die Untermittelschicht ein zweites Zwischenmaterial umfasst,
   und
- die Unterschicht ein zweites Elektrodenmaterial umfasst,
   wobei
- das erste Zwischenmaterial der Obermittelschicht und das zweite Zwischenmaterial der Untermittelschicht unterschiedlich sind,
- die vier Schichten gemäß der vorstehenden Reihenfolge übereinander angeordnet sind,
   und
- die Obermittelschicht und/oder die Untermittelschicht zusätzlich zum zweiten Zwischenmaterial mindestens einen Füllstoff umfasst.

Eine solche Vorrichtung hat insbesondere die nachstehend beschriebenen Vorteile, wenn sie in einen erfindungsgemäßen Reifen wie nachstehend beschrieben eingebaut ist.

Bevorzugt ist eine Vorrichtung wie vorstehend beschrieben, dadurch gekennzeichnet, dass zum Messen einer mechanischen Kraft, umfassend eine erste, zweite, dritte, vierte und fünfte Schicht, dadurch gekennzeichnet, dass
a) die erste Schicht ein erstes Elektrodenmaterial umfasst,
b) die zweite Schicht ein erstes Zwischenmaterial mit einer dielektrischen Leitfähigkeit eᵣ von größer als 1,01 F·m⁻¹ umfasst,
c) die dritte Schicht ein Isolationsmaterial umfasst,
d) die vierte Schicht ein zweites Zwischenmaterial mit einer dielektrischen Leitfähigkeit eᵣ von größer als 1,01 F·m⁻¹ umfasst,
   und
e) die fünfte Schicht ein zweites Elektrodenmaterial umfasst,
   wobei
   - das erste Zwischenmaterial der zweiten Schicht und das zweite Zwischenmaterial der vierten Schicht unterschiedlich sind,
   - die fünf Schichten übereinander angeordnet sind,
   - die zweite und vierte Schicht in einem ersten Zustand der Vorrichtung mittels der dritten Schicht voneinander getrennt werden
      und
   - die dritte Schicht so ausgelegt ist, dass die zweite und vierte Schicht in einem zweiten Zustand der Vorrichtung miteinander in Kontakt treten können.

Bevorzugt ist eine Vorrichtung wie vorstehend beschrieben, dadurch gekennzeichnet, dass
a) die erste Schicht aus einem ersten Elektrodenmaterial besteht,
b) die zweite Schicht ein erstes Zwischenmaterial mit einer dielektrischen Leitfähigkeit eᵣ von größer als 1,01 F·m⁻¹ umfasst,
c) die dritte Schicht ein Isolationsmaterial umfasst,
d) die vierte Schicht ein zweites Zwischenmaterial mit einer dielektrischen Leitfähigkeit eᵣ von größer als 1,01 F·m⁻¹ umfasst,
   und
e) die fünfte Schicht aus einem zweiten Elektrodenmaterial besteht,
wobei
- das erste Zwischenmaterial der zweiten Schicht und das zweite Zwischenmaterial der vierten Schicht unterschiedlich sind,
- die fünf Schichten übereinander angeordnet sind,
- die zweite und vierte Schicht in einem ersten Zustand der Vorrichtung mittels der dritten Schicht voneinander getrennt werden
   und
- die dritte Schicht so ausgelegt ist, dass die zweite und vierte Schicht in einem zweiten Zustand der Vorrichtung miteinander in Kontakt treten können.

Insbesondere bevorzugt ist eine Vorrichtung wie vorstehend beschrieben, dadurch gekennzeichnet, dass
a) die erste Schicht aus einem ersten Elektrodenmaterial besteht,
b) die zweite Schicht aus einem ersten Zwischenmaterial mit einer dielektrischen Leitfähigkeit eᵣ von größer als 1,01 F·m⁻¹ besteht,
c) die dritte Schicht ein Isolationsmaterial umfasst,
d) die vierte Schicht aus einem zweiten Zwischenmaterial mit einer dielektrischen Leitfähigkeit eᵣ von größer als 1,01 F·m⁻¹ besteht,
   und
e) die fünfte Schicht aus einem zweiten Elektrodenmaterial besteht,
wobei
- das erste Zwischenmaterial der zweiten Schicht und das zweite Zwischenmaterial der vierten Schicht unterschiedlich sind,
- die fünf Schichten übereinander angeordnet sind,
- die zweite und vierte Schicht in einem ersten Zustand der Vorrichtung mittels der dritten Schicht voneinander getrennt werden
   und
- die dritte Schicht so ausgelegt ist, dass die zweite und vierte Schicht in einem zweiten Zustand der Vorrichtung miteinander in Kontakt treten können.

Es ist im Rahmen der vorliegenden Erfindung bevorzugt, dass der Übergang der Vorrichtung vom ersten Zustand in den zweiten Zustand mittels der Einwirkung einer mechanischen Kraft auf die erfindungsgemäße Vorrichtung ausgelöst wird. Besonders bevorzugt ist es zudem, wenn die erfindungsgemäße Vorrichtung im zweiten Zustand anschließend in einen dritten Zustand überführt wird, sobald die vorstehend beschriebene mechanische Kraft nicht mehr auf die erfindungsgemäße Vorrichtung einwirkt. Der dritte Zustand der erfindungsgemäßen Vorrichtung unterscheidet sich von dem ersten Zustand der erfindungsgemäßen Vorrichtung dadurch, dass eine elektrische Spannung zwischen der zweiten und der vierten oder zwischen der ersten und der fünften Schicht der erfindungsgemäßen Vorrichtung gemessen werden kann.

Im Rahmen der vorliegenden Erfindung umfasst der Ausdruck "mechanische Kraft" bevorzugt jede Einwirkung von außen auf eine erfindungsgemäße Vorrichtung, welche bewirkt, dass die erfindungsgemäße Vorrichtung von dem ersten Zustand in den zweiten Zustand überführt wird. Die vorstehend beschriebene mechanische Kraft sollte dabei bevorzugt senkrecht zur Längserstreckung der fünf Schichten der erfindungsgemäßen Vorrichtung wirken.

Bevorzugt ist eine erfindungsgemäße Vorrichtung wie vorstehend beschrieben oder wie vorstehend als bevorzugt beschrieben, wenn die fünf Schichten in der vorstehend durch die Buchstaben a), b), c), d) und e) angegebenen Reihenfolge übereinander liegen und zwischen ihnen keine weiteren Schichten vorhanden sind.

Besonders bevorzugt ist es, wenn die erfindungsgemäße Vorrichtung eine Sendeeinheit umfasst, welche die erzeugte Spannung zwischen der ersten und der fünften Schicht der erfindungsgemäßen Vorrichtung in ein elektromagnetisches Signal umwandelt, welches dann platzsparenderweise an anderer Stelle von einer Empfangseinheit empfangen werden kann. Vorteilhaft ist es dabei, wenn das Signal Informationen zur Höhe der Spannung enthält, um die Spannung und somit die eingewirkte mechanische Kraft quantifizieren zu können.

Im Rahmen der vorliegenden Erfindung können für das erste und das zweite Elektrodenmaterial der erfindungsgemäßen Vorrichtung jedes im Stand der Technik bekannte Material eingesetzt werden, welches im Stand der Technik in einer Elektrode verwendet wird. Bevorzugt bestehen beide Elektrodenmaterialien aus dem gleichen Material, insbesondere dem gleichen Metall. Im Rahmen der vorliegenden Erfindung sind bevorzugte Elektrodenmaterialien ausgesucht aus der Gruppe bestehend aus: Kupfer, Aluminium, Silber, Eisenoxid und Materialien auf Kohlenstoffbasis. Besonders bevorzugt sind die Elektrodenmaterialien ausgesucht aus der Gruppe bestehend aus: Kupfer, Aluminium, Silber und Materialien auf Kohlenstoffbasis. Besonders bevorzugt sind die Elektrodenmaterialien ausgesucht aus der Gruppe bestehend aus: Kupfer, Aluminium, Carbonfaser und Kautschukmischungen mit einer spezifischen Leitfähigkeit bei 20°C von mehr als 1 S·cm⁻¹. Solche Kautschukmischungen sind insbesondere Kautschukmischungen mit einem Rußanteil von mehr als 20 phr Ruß, besonders bevorzugt mehr als 50 phr Ruß, ganz besonders bevorzugt mehr als 80 phr Ruß. Im Rahmen der vorliegenden Erfindung sind Materialien auf Kohlenstoffbasis bevorzugt Graphit, Graphen, Kohlenstoff-Nanoröhrchen, Ruß. Die erste und fünfte Schicht müssen nicht die gleichen Maße haben wie die zweite und vierte Schicht und können insbesondere kleiner sein. Denkbar ist auch, dass die erste und fünfte Schicht gewebeartig aufgebaut sind und somit keine durchgängigen Schichten bilden. Auch möglich ist es, wenn die erste und fünfte Schicht aus einem oder mehreren voneinander getrennten Drähten und/oder Fasern bestehen. Die Aufgabe des Elektrodenmaterials der ersten und fünften Schicht einer erfindungsgemäßen Vorrichtung ist hauptsächlich den schnellen Transport von Elektronen zu garantieren und kann daher beliebig ausgebildet sein, solange diese Funktion erfüllt wird.

Im Rahmen der vorliegenden Erfindung können als erstes oder als zweites Zwischenmaterial jegliche Materialien eingesetzt werden, welche eine dielektrische Leitfähigkeit eᵣ von größer als 1,01 F·m⁻¹ aufweisen. Das Zwischenmaterial hat im Rahmen der vorliegenden Erfindung lediglich die Aufgabe, Elektronen von dem jeweils anderen Zwischenmaterial aufzunehmen bzw. abzugeben und somit eine entsprechend gegenpolige Ladung im jeweils angrenzenden Elektrodenmaterial zu erzeugen. Durch die im Elektrodenmaterial erzeugte gegenpolige Ladung wird eine Spannung zwischen der ersten und der fünften Schicht der erfindungsgemäßen Vorrichtung erzeugt. Überraschenderwiese wurde im Rahmen der vorliegenden Erfindung festgestellt, dass Zwischenmaterialien mit einer dielektrischen Leitfähigkeit eᵣ von größer als 1,01 F·m⁻¹ ausreichen, um eine genügen große Spannung zu erzeugen, welche zur Messung der mechanischen Kraft genutzt werden kann.

Vorteilhaft ist hierbei zudem, wenn das Isolationsmaterial der dritten Schicht einer erfindungsgemäßen Vorrichtung bevorzugt eine geringere Leitfähigkeit bei 20°C aufweist als die Leitfähigkeit des ersten Zwischenmaterials und des zweiten Zwischenmaterials. Eine geringe Leitfähigkeit des Isolationsmaterials als das erste und zweite Zwischenmaterial würde bereits ausreichen, um zumindest kurzfristig eine Spannung zwischen der zweiten und der vierten Schicht oder der ersten und der fünften Schicht zu erzeugen, welche zur Erzeugung eines elektrischen Signals genutzt werden kann.

Besonders große mechanische Kräfte können auch besonders große Spannungen in der erfindungsgemäßen Vorrichtung erzeugt werden, welche nicht nur zum Messen der mechanischen Kraft benutzt werden können, sondern auch zum Laden eines Stromspeichers oder zum Antreiben einer elektrisch betriebenen Vorrichtung.

Bevorzugt ist eine Vorrichtung wie vorstehend beschrieben oder wie vorstehend als bevorzugt beschrieben, wobei die Vorrichtung eine dritte Schicht umfasst und die zweite und vierte Schicht in einem ersten Zustand der Vorrichtung mittels der dritten Schicht voneinander getrennt werden, wobei die dritte Schicht so ausgelegt ist, dass die zweite und vierte Schicht in einem zweiten Zustand der Vorrichtung miteinander in Kontakt treten können.

Wie vorstehend beschrieben ist es vorteilhaft eine dritte Schicht in einer erfindungsgemäßen Vorrichtung zu haben, welche dafür sorgt, dass die zweite und vierte Schicht vollständig voneinander getrennt sind, umso eine maximale elektrische Leistung, d.h. das Produkt von gemessener Spannung zum Stromfluss, der erfindungsgemäßen Vorrichtung zu erreichen. Es ist jedoch auch möglich, einen Stromfluss und somit eine Spannung zwischen der zweiten und vierten Schicht der erfindungsgemäßen Vorrichtung und somit auch zwischen der ersten und fünften Schicht zu erreichen, ohne dass sich die zweite und vierte Schicht vollständig voneinander trennen. In einer erfindungsgemäßen Vorrichtung können auch eine Spannung und ein Stromfluss erzeugt werden, wenn sich die vierte und zweite Schicht permanent berühren und nur die auf sie wirkende Kraft variiert wird. Eine solche bevorzugte Ausführungsform der vorliegenden Erfindung ist insbesondere für die Anwendung in einem Fahrzeugreifen vorteilhaft, da hier eine vor- oder nachstehend beschriebene dritte Schicht nur schwer zu realisieren ist. Eine dritte Schicht ist aus den vorstehend genannten Gründen nur optimal für eine erfindungsgemäße Vorrichtung.

Bevorzugt ist eine Vorrichtung wie vorstehend beschrieben oder wie vorstehend als bevorzugt beschrieben, wobei die Vorrichtung
- zusätzlich Mittel zur Messung der Spannung zwischen der ersten und der fünften Schicht der Vorrichtung umfasst
   und/oder
- eine Sendeeinheit umfasst, welche dazu geeignet ist, aus der Spannung zwischen der ersten und der fünften Schicht der Vorrichtung ein elektromagnetisches Signal zu generieren,
   und/oder
- zusätzlich Mittel zum Kontaktieren des ersten und des zweiten Elektrodenmaterials mit dem Mittel zur Messung der Spannung oder mit der Sendeeinheit ermöglicht.

Bevorzugt ist es, dass die erfindungsgemäße Vorrichtung Mittel zum Umwandeln der erzeugten elektrischen Spannung in ein RF-Signal umfasst, wobei aus dem RF-Signal auch die Höhe der Spannung herausgelesen werden kann. Diese ermöglicht, dass die Steuer- und/oder Regeleinheit, welche das Signal auswertet, nicht an der gleichen Stelle wie die erfindungsgemäße Vorrichtung angebracht werden muss.

Im Rahmen der vorliegenden Erfindung beziehen sich die Werte zu der elektrischen Leitfähigkeit, falls nicht anders angegeben, immer auf Werte, welche bei Normalbedingungen gemessen wurden, d. h. insbesondere bei 20°C und atmosphärischem Druck. Die elektrische Leitfähigkeit kann beispielsweise mit der Norm ASTM E1004 - 17 durchgeführt werden.

Bevorzugt ist eine Vorrichtung wie vorstehend beschrieben oder wie vorstehend als bevorzugt beschrieben, wobei die zweite und/oder vierte Schicht zusätzlich zum zweiten Zwischenmaterial mindestens einen Füllstoff umfasst, wobei bevorzugt der mindestens eine Füllstoff im Falle von Silica bevorzugt in einer Gesamtmenge im Bereich von 0,1 Gew.-% bis 50 Gew.-%, bevorzugt im Bereich von 5 Gew.-% bis 25 Gew.-%, besonders bevorzugt im Bereich von 10 Gew.-% bis 20 Gew.-%, ganz besonders bevorzugt im Bereich von 13 Gew.-% bis 17 Gew.-%, jeweils bezogen auf die Gesamtmasse der zweite und/oder vierte Schicht der Vorrichtung. Eine solche Vorrichtung erzeugt eine noch größere elektrische Leistung.

Bevorzugt ist eine Vorrichtung wie vorstehend beschrieben oder wie vorstehend als bevorzugt beschrieben, wobei der mindestens eine Füllstoff in der zweite und/oder vierte Schicht, insbesondere im Falle von Ruß, in einer Gesamtmenge im Bereich von 0,1 Gew.% bis 50 Gew.-%, bevorzugt im Bereich von 1 Gew.-% bis 20 Gew.-%, besonders bevorzugt im Bereich von 1 Gew.-% bis 10 Gew.-%, ganz besonders bevorzugt im Bereich von 3 Gew.-% bis 7 Gew.-%, jeweils bezogen auf die Gesamtmasse der zweite und/oder vierte Schicht der Vorrichtung.

Eine solche Vorrichtung erzeugt eine noch größere elektrische Leistung.

Bevorzugt ist eine Vorrichtung wie vorstehend beschrieben oder wie vorstehend als bevorzugt beschrieben, wobei die dritte Schicht ein Isolationsmaterial aufweist, welches bei 20°C eine elektrische Leitfähigkeit von weniger als 10⁻¹ S·cm⁻¹ aufweist, bevorzugt von weniger als 10⁻³ S·cm⁻¹, besonders bevorzugt weniger als 10⁻⁶ S·cm⁻¹.

Ein Vorteil des vorstehend beschriebenen Aspekts der vorliegenden Erfindung ist, dass die vorstehend beschriebenen Isolationsmaterialen durch ihre geringe elektrische Leitfähigkeit die im zweiten Zustand der erfindungsgemäßen Vorrichtung übergegangenen Elektronen besonders lange getrennt halten.

Bevorzugt ist eine Vorrichtung wie vorstehend beschrieben oder wie vorstehend als bevorzugt beschrieben, wobei jede der fünf Schichten eine Quererstreckung und zwei Längsflächen aufweist, wobei
die gesamte Fläche einer Längsfläche der zweiten Schicht in Kontakt mit der Fläche einer Längsfläche der ersten Schicht steht
   und/oder
die gesamte Fläche einer Längsfläche der vierten Schicht in Kontakt mit der Fläche einer Längsfläche der fünften Schicht steht.

Ein Vorteil des vorstehend beschriebenen Aspekts der vorliegenden Erfindung ist, dass ein besonders flächendeckender Kontakt zwischen den Schichten eine schnellere Induktion von Spannung zwischen der ersten und der fünften Schicht der Elektronen zwischen den jeweiligen Schichten ermöglicht.

Im Rahmen der vorliegenden Erfindung ist es bevorzugt, wenn die Quererstreckung einer Schicht einer erfindungsgemäßen Vorrichtung parallel zur kleinsten Erstreckung der Schicht und damit senkrecht zu den Längsflächen der Schichten einer erfindungsmäßen Vorrichtung verlaufen. Besonders bevorzugt ist es wenn die Längsflächen der Schichten einer erfindungsmäßen Vorrichtung die Flächen der Schichten der erfindungsmäßen Vorrichtung sind, welche jeweils an die benachbarte Schicht der erfindungsgemäßen Vorrichtung angrenzen. Dies gilt sowohl für alle vorstehend als auch für alle nachstehend beschriebenen erfindungsgemäß Vorrichtungen.

Bevorzugt ist eine Vorrichtung wie vorstehend beschrieben oder wie vorstehend als bevorzugt beschrieben, wobei jede der fünf Schichten eine Quererstreckung und zwei Längsflächen aufweist, wobei in dem ersten Zustand der Vorrichtung
- die gesamte Fläche der ersten Längsfläche der dritten Schicht in Kontakt mit der gesamten Fläche einer Längsfläche der zweiten Schicht steht
   und/oder
- die gesamte Fläche der zweiten Längsfläche der dritten Schicht in Kontakt mit der gesamten Fläche einer Längsfläche der vierten Schicht steht
   und
wobei im zweiten Zustand der erfindungsgemäßen Vorrichtung,
- mindestens 50% der Fläche der gesamten Fläche der besagten Längsfläche der zweiten Schicht, bevorzugt mindestens 80 %, in Kontakt sind mit der Fläche der besagten Längsfläche der vierten Schicht
   und
- mindestens 50% der Fläche der gesamten Fläche der besagten Längsfläche der vierten Schicht, bevorzugt mindestens 80 %, in Kontakt sind mit der Fläche der besagten Längsfläche der zweiten Schicht.

Ein Vorteil des vorstehend beschriebenen Aspekts der vorliegenden Erfindung ist, dass im zweiten Zustand der erfindungsgemäßen Vorrichtung besonders viele Elektronen pro Längsfläche zwischen der zweiten und der vierten Schicht übertragen werden können.

Bevorzugt ist eine Vorrichtung wie vorstehend beschrieben, , wobei
das erste Zwischenmaterial der zweiten Schicht eine dielektrische Leitfähigkeit εᵣ von größer als 1,1 F·m⁻¹ aufweist, bevorzugt größer als 1,5 F·m⁻¹, bevorzugt größer als 2 F·m⁻¹, besonders bevorzugt größer als 5 F·m⁻¹, ganz besonders bevorzugt größer als 10 F·m⁻¹, und/oder
das zweite Zwischenmaterial der vierten Schicht eine dielektrische Leitfähigkeit eᵣ von größer als 1,1 F·m⁻¹ aufweist, bevorzugt größer als 1,5 F·m⁻¹, bevorzugt größer als 2 F·m⁻¹, besonders bevorzugt größer als 5 F·m⁻¹, ganz besonders bevorzugt größer als 10 F·m⁻¹.

Ein Vorteil des vorstehend beschriebenen Aspekts der vorliegenden Erfindung ist, dass die vorstehend beschriebenen ersten und zweiten Zwischenmaterialien besonders viele Elektronen aufnehmen können und somit besonders hohe Spannungsunterschiede zwischen der ersten und fünften Schicht einer erfindungsgemäßen Vorrichtung erzeugen können. Dies ermöglicht besonders kleine einwirkende mechanische Kräfte mit einer erfindungsgemäßen Vorrichtung zu messen.

Besonders bevorzugt ist die dielektrische Leitfähigkeit eᵣ eines der vorstehend beschriebenen ersten oder zweiten Zwischenmaterialien nicht größer als 100 F·m⁻¹, ganz besonders bevorzugt nicht größer als 50 F·m⁻¹.

Im Rahmen der vorliegenden Erfindung wird die dielektrische Leitfähigkeit eᵣ eines Zwischenmaterials auch relative Permittivität eᵣ genannt und bei 20 °C und einer Frequenz von 50 Hz gemessen. Die Messung kann beispielsweise mit einem handelsüblichen RLC-Messgerät nach einem für den Fachmann bekannten Verfahren durchgeführt werden.

Bevorzugt wird die Ermittlung der dielektrischen Leitfähigkeit eᵣ wie folgt mittels eines handelsüblichen RLC- Messgerät ausgeführt:
Der Verlustfaktor Tan δ wird direkt als "DF-Dissipation Factor" angezeigt,
während er mit Hilfe der Messergebnisse des mit dielektrischem Material gefüllten Plattenkondensators errechnet werden muss oder während er bevorzugt mit Hilfe der Messergebnisse einer erfindungsgemäßen Vorrichtung errechnet werden muss.

Bei der Kapazitätsmessung muss berücksichtigt werden, dass am Eingang der Brücke des Plattenkondensators außer der gesuchten Kapazität der Elektroden auch die Kapazität der Zuleitung und des Probenkondensatorgehäuses miterfasst wird. Die daraus resultierende Fehlkapazität C_{F} ist unabhängig von der Frequenz und muss bei der Auswertung berücksichtigt werden, d. h. abgezogen werden.

Bevorzugt ist eine Vorrichtung wie vorstehend beschrieben oder wie vorstehend als bevorzugt beschrieben, wobei die Differenz zwischen der spezifischen triboelektrischen Affinität des ersten Zwischenmaterials der zweiten Schicht und der spezifischen triboelektrischen Affinität des zweiten Zwischenmaterials der vierten Schicht bei mindestens 20 nC/J liegt, bevorzugt bei mindestens 40 nC/J, besonders bevorzugt bei mindestens 60 nC/J, gemessen bei 20°C und bei 35% relativer Luftfeuchtigkeit.

Ein Vorteil des vorstehend beschriebenen Aspekts der vorliegenden Erfindung ist, dass das erste und das zweite Zwischenmaterial nicht nur eine ausreichend große Permittivität wie vorstehend beschrieben aufweisen, sondern auch eine ausreichend große Differenz in Bezug auf die spezifische triboelektrische Affinität aufweisen und somit bei Kontakt der zweiten Schicht mit der vierten Schicht der erfindungsgemäßen Vorrichtung im zweiten Zustand besonders viele Elektronen übertragen können.

Im Rahmen der vorliegenden Erfindung wurde herausgefunden, dass solche Kräfte im Reifen, welche entlang der radialen Richtung wirken, mit einem Unterschied von 20 nC/J ausreichend gut gemessen werden können.

Im Rahmen der vorliegenden Erfindung wurde ebenfalls herausgefunden, dass solche Kräfte im Reifen, welche entlang der Umlaufrichtung Richtung wirken, mit einem Unterschied von 40 nC/J ausreichend gut gemessen werden können.

Im Rahmen der vorliegenden Erfindung wurde ebenfalls herausgefunden, dass Seitenkräfte im Reifen mit einem Unterschied von 60 nC/J ausreichend gut gemessen werden können. Die Messung der spezifischen triboelektrischen Affinität eines Zwischenmaterials wurde im Rahmen der vorigen Erfindung bei Atmosphärendruck und 22°C durchgeführt. Eine aus einem Zwischenmaterial bestehende Probe mit einer Fläche von 1cm x 1cm, im folgenden Zwischenmaterialprobe genannt, und Referenzprobe aus Acrylnitril-Butadien-Kautschuk und mit einer Fläche von 1cm x 2cm wurden bereitgestellt. Die Referenzprobe wurde auf einen Kupferkontakt mit einer gleichen Fläche von 1cm x 2cm flächendeckend befestigt. Die Zwischenmaterialprobe und die Referenzprobe wurden mit einem "7006 AC GEN4 Ionizing Bar" der Fa. Exair elektrostatisch neutralisiert. Anschließend wurden die Zwischenmaterialprobe an einem Ende der Referenzprobe mit einer Fläche von 1cm x 2cm flächendeckend aufeinandergelegt. Anschließend wurden die Probenmaterialien mit der aufeinander liegenden Fläche von 1 cm² mit einer Kraft von 0,1 N Kante an Kante aufeinandergedrückt und während der Anwendung dieser Kraft wurde die Zwischenmaterialprobe von einem Ende der Referenzprobe zum anderen Ende der Referenzprobe gezogen, sodass sie dabei eine Strecke von 1 cm zurücklegte. Die entstandene Spannung zwischen der Zwischenmaterialprobe und der Referenz wurde nach ausreichendem Trennen der Zwischenmaterialprobe und der Referenzprobe mittels eines AlphLab Surface DC Voltmeter SVM2 der Firma "AlphaLab Inc." und Anbringen der Zwischenmaterialprobe auf einem entsprechenden Kupferkontakt mit einer gleichen Fläche von 1cm x 1cm ermittelt. Der Kehrwert des so ermittelten Spannungswerts zwischen den beiden Kontakten ergibt die vorstehend beschriebene spezifische triboelektrische Affinität des untersuchten Zwischenmaterials.

Die spezifische triboelektrische Affinität des ersten und des zweiten Zwischenmaterials sollten bevorzugt nicht über 150 nC/J, besonders bevorzugt nicht über 100 nC/J.

Bevorzugt ist eine Vorrichtung wie vorstehend beschrieben oder wie vorstehend als bevorzugt beschrieben, wobei die dritte Schicht eine Stützumrandung bestehend aus einem vulkanisierten natürlichen oder synthetischen Kautschuk oder einem Duroplasten umfasst und in der Stützumrandung eine Mischung vorliegt, wobei die Mischung ein oder mehrere Gase und/oder aus einem Isolationsmaterial bestehende Partikel umfasst, wobei die Stützumrandung bevorzugt eine Dicke von 0 bis 200 µm und/oder eine elektrische Leitfähigkeit von höchsten 10 µS/m aufweist.

Bevorzugt ist eine Vorrichtung wie vorstehend beschrieben oder wie vorstehend als bevorzugt beschrieben, wobei die dritte Schicht
- aus einer Mischung besteht, wobei die Mischung ein Gas und aus dem Isolationsmaterial bestehende Partikel umfasst oder aus einem Gas und aus dem Isolationsmaterial bestehende Partikel besteht, wobei das Isolationsmaterial bevorzugt ausgesucht ist aus der Gruppe bestehend aus Wolle, einem Harz, Bernstein, Holz, Papier und Polycarbonat.

Als Gas sind Luft, Stickstoff oder Argon, insbesondere jedoch Luft, bevorzugt. Die Partikel können in runder Form, schnurrartig oder einer anderen Form vorliegen. Bevorzugt liegen sie schnurrartig wie bei Wolle mit einer Längserstreckung von 1 mm bis 10 cm und einer Dicke von maximal 1 mm vor.

Bevorzugt ist eine Vorrichtung wie vorstehend beschrieben oder wie vorstehend als bevorzugt beschrieben, wobei die dritte Schicht als Isolationsmaterial eine Flüssigkeit mit einer Viskosität bei 20 °C im Bereich von 0,1 mPa·s bis 10⁶ mPa·s aufweist oder daraus besteht, bevorzugt mit einer Viskosität bei 20 °C im Bereich von 1 mPa·s bis 10 000 mPa·s, besonders bevorzugt mit einer Viskosität bei 20 °C im Bereich von 1 mPa·s bis 100 mPa·s. Bevorzugt besteht die dritte Schicht aus der vorstehend beschriebenen Flüssigkeit.

Ein Vorteil des vorstehend beschriebenen Aspekts der vorliegenden Erfindung ist, dass Flüssigkeiten mit den vorstehend beschriebenen Viskositäten sowie insbesondere mit den weiter oben beschriebenen Leitfähigkeiten der dritten Schicht sich besonders gut als dritte Schicht in einer erfindungsgemäßen Vorrichtung eignen. Hierbei sollte die dritte Schicht jedoch so von einem weiteren Material seitlich begrenzt werden, dass die vorstehend beschriebene Flüssigkeit an Ort und Stelle bleibt. Dieses weitere Material sollte nichtleitend mit den weiter oben beschriebenen Leitfähigkeiten, da es sowohl die zweite mit der vierten Schicht dabei die vorstehend beschriebene Flüssigkeit begrenzend verbinden würde.

Bevorzugt ist eine Vorrichtung wie vorstehend beschrieben oder wie vorstehend als bevorzugt beschrieben, wobei die dritte Schicht als Isolationsmaterial eine Verbindung mit einem Kompressionsmodul im Bereich von 1 bis 30 GPa umfasst, bevorzugt mit einem Kompressionsmodul im Bereich von 5 bis 10 GPa.

Ein Vorteil des vorstehend beschriebenen Aspekts der vorliegenden Erfindung ist, dass Verbindung mit den vorstehend beschriebenen Kompressionsmodulen sowie insbesondere mit den weiter oben beschriebenen Leitfähigkeiten der dritten Schicht sich besonders gut als dritte Schicht in einer erfindungsgemäßen Vorrichtung eignen. Insbesondere für die Anwendung in einem Reifen oder technischen Gummiartikeln wie Förderbändern, Schläuche und Antriebsriemen, ganz besonders jedoch für Reifen.

Bevorzugt ist eine Vorrichtung wie vorstehend beschrieben oder wie vorstehend als bevorzugt beschrieben, wobei das erste Zwischenmaterial der zweiten Schicht ein festes Material umfasst oder hauptsächlich aus einem festen Material besteht ausgesucht aus der Gruppe bestehend aus Polyurethan, Aluminium, Polyamid, einem Glimmer, Glas, Polyacrylate, Quarz, Blei, Seide, Cellulose und deren Mischungen. Besonders bevorzugt umfasst das erste Zwischenmaterial oder besteht das erste Zwischenmaterial hauptsächlich aus einem festen Material ausgesucht aus der Gruppe bestehend aus Polyurethan, Polyamid, einem Glimmer, Glas, Polyacrylate, Quarz, Seide, Poly(organo)siloxane, Cellulose und deren Mischungen.

Bevorzugt ist auch eine Vorrichtung wie vorstehend beschrieben oder wie vorstehend als insbesondere bevorzugt beschrieben, wobei das erste Zwischenmaterial der zweiten Schicht Nylon oder Aluminium ist. Aber auch Glas und Cellulose sind bevorzugt, da sie vorteilhafterweise eine dielektrische Leitfähigkeit von über 2 F·m⁻¹ haben.

Bevorzugt ist eine Vorrichtung wie vorstehend beschrieben oder wie vorstehend als insbesondere bevorzugt beschrieben, wobei das zweite Zwischenmaterial der vierten Schicht ein festes Material umfasst oder hauptsächlich aus einem festen Material besteht ausgesucht aus der Gruppe bestehend aus natürlichem oder synthetischem Kautschuk, Polyester, Polyethylen, Polyethylen-Terphthalate, Polypropylen, Polystyrol, Polychlorobutadien, Polyacrilonitril, Polyvinylchlorid, Poly(organo)siloxane, Teflon, Polyimide, vulkanisierte Kautschukpartikel, Füllstoffe und deren Mischungen. Besonders bevorzugt umfasst zweite Zwischenmaterial der vierten Schicht oder besteht zweite Zwischenmaterial der vierten Schicht hauptsächlich aus einem festen Material ausgesucht aus der Gruppe bestehend aus Azetatseide, natürlichem oder synthetischem Kautschuk, Epichlorhydrin-Kautschuk, Polyester, Polyethylen, Polyethylen-Terphthalate, Polypropylen, Polystyrol, Polychlorobutadien, Polyacrilonitril, Polyvinylchlorid, Teflon, Polyimide, vulkanisierte Kautschukpartikel, Füllstoffe und deren Mischungen, wobei als natürlicher oder synthetischer Kautschuk die Kautschuke BR, SBR, SSBR, PDMS, ISBR und Epichlorhydrin-Kautschuk bevorzugt sind.

Im Rahmen der vorliegenden Erfindung umfasst der Ausdruck "Epichlorhydrin-Kautschuk" alle Polymere, die als Monomereinheit Epichlorhydrin umfassen, insbesondere polymerisiertes Epichlorhydrin, Block-Copolymer teilweise hergestellt aus Epichlorhydrin und Terpolymere teilweise hergestellt aus Epichlorhydrin, insbesondere das Terpolymer hergestellt aus Epichlorhydrin, Epoxy-Ether (d.h. Ethylenoxid) und Allyl-Glycidyl ether, namentlich GECO.

Bevorzugt ist auch eine Vorrichtung wie vorstehend beschrieben oder wie vorstehend als insbesondere bevorzugt beschrieben, wobei als zweites Zwischenmaterial der vierten Schicht natürlichen oder synthetischen Kautschuk, Poly(organo)siloxane, vulkanisierte Kautschukpartikel mit oberflächenmodifizierten Fluorkohlenwasserstoffketten und deren Mischungen umfasst, wobei jedes der genannten zweiten Zwischenmaterialien besonders bevorzugt zusätzlich Graphit, Silica oder Ruß umfasst. Besonders bevorzugt ist eine Vorrichtung wie vorstehend beschrieben oder wie vorstehend als insbesondere bevorzugt beschrieben, wobei als zweites Zwischenmaterial der vierten Schicht Polyisopren, Poly(dimethyl)siloxane, vulkanisierte Kautschukpartikel mit oberflächenmodifizierten Fluorkohlenwasserstoffketten und deren Mischungen, wobei jedes der genannten zweiten Zwischenmaterialien insbesondere ganz besonders bevorzugt zusätzlich Graphit umfasst. Aber auch natürlicher oder synthetischer Kautschuk, Polyethylen, Polypropylen, Polyvinylchlorid oder Teflon sind als zweites Zwischenmaterial der vierten Schicht bevorzugt, da sie vorteilhafterweise eine dielektrische Leitfähigkeit von über 2 F·m⁻¹ haben, wobei als natürlicher oder synthetischer Kautschuk die Kautschuke BR, SBR, SSBR, PDMS, ISBR und Epichlorhydrin-Kautschuk bevorzugt sind.

Bevorzugt ist eine Vorrichtung wie vorstehend beschrieben oder wie vorstehend als bevorzugt beschrieben, wobei Vorrichtung zusätzlich eine Stabilisationshülle zur Vergrößerung der mechanischen Stabilität der Vorrichtung umfasst, welche die Gesamtheit der fünf Schichten umschließt.

Ein Vorteil des vorstehend beschriebenen Aspekts der vorliegenden Erfindung ist, dass die Stabilisationshülle die Schichten an ihren Plätzen hält und der Vorrichtung mechanische Stabilität gibt. Sie kann sich auch teilweise bis zwischen die vierte und zweite Schicht einer erfindungsgemäßen Vorrichtung erstrecken, um bei der Ausdehnung der dritten Sicht nach der Anwendung der mechanischen Kraft zu helfen.

Die Stabilisationshülle kann hauptsächlich oder gänzlich aus einer der folgenden Verbindungen bestehen: einem Harz, Bernstein, Holz, Papier, Polycarbonat, Polyurethan, Polyamid, Polyacrylate, natürlichem oder synthetischem Kautschuk, Polyester, Polyethylen, Polyethylen-Terphthalate, Polypropylen, Polystyrol, Polychlorobutadien, Polyacrilonitril, Polyvinylchlorid, Poly(organo)siloxane, Teflon, Polyimide, vulkanisierte Kautschukpartikel, Füllstoffe und deren Mischungen. Bevorzugt besteht die Stabilisationshülle jedoch aus einem Harz, Bernstein, Holz, Papier, oder Polycarbonat.

Bevorzugt ist eine Vorrichtung wie vorstehend beschrieben oder wie vorstehend als bevorzugt beschrieben, wobei
das zweite Zwischenmaterial der vierten Schicht
- Epichlorhydrin-Kautschuk umfasst oder
- hauptschlich oder gänzlich aus Epichlorhydrin-Kautschuk besteht
   und/oder
   das erste Zwischenmaterial der zweiten Schicht
   - Poly(organo)siloxane, bevorzugt PDMS, umfasst oder
   - hauptschlich oder gänzlich aus Poly(organo)siloxanen, bevorzugt PDMS, besteht.

Eine solche erfindungsgemäße Vorrichtung weist eine größere elektrische Leistung auf.

Bevorzugt ist eine Vorrichtung wie vorstehend beschrieben oder wie vorstehend als bevorzugt beschrieben, wobei die Oberfläche der zweiten und/oder vierten Schicht eine Oberflächenrauheit Rₐ im Bereich von 0,1 µm bis 500 µm aufweist, bevorzugt im Bereich von 0,5 bis 100 µm, besonders bevorzugt im Bereich von 1 bis 50 µm, ganz besonders bevorzugt im Bereich von 1 bis 5 µm, gemessen nach DIN EN ISO 4288:1998. Die besagte Oberfläche der zweiten und/oder vierten Schicht ist im Rahmen der vorliegenden Erfindung stets die der dritten Schicht zugewandte Oberfläche der zweiten und/oder vierten Schicht. Eine solche erfindungsgemäße Vorrichtung weist eine größere elektrische Leistung auf.

Bevorzugt ist eine Vorrichtung wie vorstehend beschrieben oder wie vorstehend als bevorzugt beschrieben, wobei die zweiten und/oder vierten Schicht eine Schichtdicke im Bereich im Bereich von 10 bis 1000 µm aufweisen, bevorzugt im Bereich von 30 bis 300 µm, besonders bevorzugt im Bereich von 70 bis 160 µm oder von 101 bis 160 µm, ganz besonders bevorzugt im Bereich von 110 bis 130 µm.

Eine solche erfindungsgemäße Vorrichtung weist eine größere elektrische Leistung auf.

Bevorzugt ist eine Vorrichtung wie vorstehend beschrieben oder wie vorstehend als bevorzugt beschrieben, wobei jede der fünf Schichten eine Längserstreckung senkrecht zur Quererstreckung aufweist und
- die Längserstreckung jeder einzelnen der fünf Schichten im Bereich von 0,1 bis 1000 mm liegt, bevorzugt im Bereich von 0,1 bis 100 mm, besonders bevorzugt im Bereich von 0,1 bis 10 mm,
   und/oder
- die Quererstreckung jeder einzelnen der fünf Schichten im Bereich von 0,01 bis 10 mm liegt, bevorzugt im Bereich von 0,01 bis 1 mm, besonders bevorzugt im Bereich von 0,01 bis 0,1 mm.

Ein Vorteil des vorstehend beschriebenen Aspekts der vorliegenden Erfindung ist, dass die vorstehenden Maße sich besonders gut für Messen einer mechanischen Kraft in Reifen oder technischen Gummiartikeln wie Förderbändern, Schläuche und Antriebsriemeneignen, ganz besonders jedoch für Reifen.

In besonders hohem Maße bevorzugt ist eine Vorrichtung wie vorstehend beschrieben dadurch gekennzeichnet, dass
a) die erste Schicht aus einem ersten Elektrodenmaterial besteht,
b) die zweite Schicht aus einem ersten Zwischenmaterial besteht,
c) die dritte Schicht ein Isolationsmaterial umfasst,
d) die vierte Schicht aus einem zweiten Zwischenmaterial besteht,
   und
e) die fünfte Schicht aus einem zweiten Elektrodenmaterial besteht,
wobei
- das erste Zwischenmaterial der zweiten Schicht und das zweite Zwischenmaterial der vierten Schicht unterschiedlich sind,
- die fünf Schichten übereinander angeordnet sind,
- die zweite und vierte Schicht in einem ersten Zustand der Vorrichtung mittels der dritten Schicht voneinander getrennt werden,
- die dritte Schicht so ausgelegt ist, dass die zweite und vierte Schicht in einem zweiten Zustand der Vorrichtung miteinander in Kontakt treten können,
- das Isolationsmaterial der dritten Schicht bei 20°C eine elektrische Leitfähigkeit von weniger als 10⁻³ S·cm⁻¹ aufweist,
- jede der fünf Schichten eine Quererstreckung und zwei Längsflächen aufweist, wobei die gesamte Fläche einer Längsfläche der zweiten Schicht in Kontakt mit der Fläche einer Längsfläche der ersten Schicht steht und die gesamte Fläche einer Längsfläche der vierten Schicht in Kontakt mit der Fläche einer Längsfläche der fünften Schicht steht,
- in dem ersten Zustand der Vorrichtung die gesamte Fläche der ersten Längsfläche der dritten Schicht in Kontakt mit der Fläche einer Längsfläche der zweiten Schicht steht und die gesamte Fläche der zweiten Längsfläche der dritten Schicht in Kontakt mit der Fläche einer Längsfläche der vierten Schicht steht,
- die dritte Schicht als Isolationsmaterial eine Flüssigkeit mit einer Viskosität bei 20 °C im Bereich von 1 mPa·s bis 100 mPa·s,
- das erste Zwischenmaterial der zweiten Schicht aus Nylon oder Aluminium besteht,
- das zweite Zwischenmaterial der vierten Schicht aus einer Mischung aus festem Polydimethylsiloxan und festen Partikeln aus Graphit besteht
   und
- jede der fünf Schichten eine Längserstreckung senkrecht zur Quererstreckung aufweist und die Längserstreckung jeder einzelnen der fünf Schichten im Bereich von 0,1 bis 100 mm und die Quererstreckung jeder einzelnen der fünf Schichten im Bereich von 0,01 bis 1 mm liegt.

Die vorstehend beschriebenen vorteilhaften Aspekte einer erfindungsgemäßen Vorrichtung zum Messen einer mechanischen Kraft gelten auch für sämtliche Aspekte eines nachstehend beschriebenen Reifen oder technischen Gummiartikels und die nachstehend diskutierten vorteilhaften Aspekte erfindungsgemäßer Reifen oder technischer Gummiartikel gelten entsprechend für sämtliche Aspekte einer erfindungsgemäßen Vorrichtung zum Messen einer mechanischen Kraft.

Die Erfindung betrifft auch einen Reifen oder einen technischer Gummiartikel umfassend eine Vorrichtung nach einem der vorangehenden Ansprüche und optional Mittel zur Messung der Spannung zwischen der ersten und der fünften Schicht der Vorrichtung oder zwischen der zweiten Schicht und der vierten Schicht der Vorrichtung.

Technische Gummiartikel sind bevorzugt Förderbändern, Schläuche und Antriebsriemen.

Bevorzugt ist ein erfindungsgemäßer Reifen ein Luftreifen, besonders bevorzugt ein Fahrzeugluftreifen, ganz besonders bevorzugt ein Fahrzeugluftreifen für Nutzfahrzeuge oder PkWs, insbesondere ganz besonders bevorzugt ein Fahrzeugluftreifen für PkWs.

Bevorzugt ist ein Reifen wie vorstehend beschrieben oder wie vorstehend als bevorzugt beschrieben, wobei
- die Vorrichtung im Laufstreifen des Reifens angebracht ist
   und
   die Mittelachse der Vorrichtung in axiale Richtung oder in Umlaufrichtung des Reifens verläuft.

Ein Vorteil des vorstehend beschriebenen Aspekts der vorliegenden Erfindung ist, dass Brems- oder Beschleunigungskräfte in Umlaufrichtung und Seitenkräfte in axialer Richtung während des Fahrens gemessen werden können.

Im Rahmen der vorliegenden Erfindung verläuft die Mittelachse einer erfindungsgemäßen Vorrichtung bevorzugt durch den geometrischen Mittelpunkt der dritten Schicht der erfindungsgemäßen Vorrichtung und senkrecht zu der Längserstreckung der dritten Schicht, wobei die Längserstreckung der dritten Schicht bevorzugt genau mittig zwischen den beiden Längsflächen der dritten Schicht der erfindungsgemäßen Vorrichtung verläuft.

Bevorzugt ist ein Reifen wie vorstehend beschrieben oder wie vorstehend als bevorzugt beschrieben umfassend eine Vorrichtung, wobei die Vorrichtung eine erste, zweite, dritte, vierte und fünfte Schicht umfasst, wobei die dritte Schicht optional ist,
**dadurch gekennzeichnet, dass**
a) die erste Schicht ein erstes Elektrodenmaterial umfasst,
b) die zweite Schicht ein erstes Zwischenmaterial umfasst,
c) die dritte Schicht ein Isolationsmaterial umfasst,
d) die vierte Schicht ein zweites Zwischenmaterial umfasst,
   und
e) die fünfte Schicht ein zweites Elektrodenmaterial umfasst,
wobei
- die zweite oder vierte Schicht eine Schichtdicke im Bereich von 10 bis 1000 µm aufweisen,
- das erste Zwischenmaterial der zweiten Schicht und das zweite Zwischenmaterial der vierten Schicht unterschiedlich sind,
- die vier Schichten oder fünf Schichten gemäß der vorstehenden Reihenfolge übereinander angeordnet sind.

Bevorzugt ist ein Reifen wie vorstehend beschrieben oder wie vorstehend als bevorzugt beschrieben, wobei die Vorrichtung
- Mittel zur Messung der Spannung zwischen der ersten und der fünften Schicht oder der zweiten und der vierten Schicht der Vorrichtung umfasst
   und/oder
- dazu geeignet ist, eine elektrische Spannung zu erzeugen, und eine an einem den Reifen umfassenden Rad angebrachte oder an dem Reifen angebrachte Batterie und/oder Akkumulator elektrisch zu laden.

Bevorzugt ist ein Reifen wie vorstehend beschrieben oder wie vorstehend als bevorzugt beschrieben, wobei die zweiten und/oder vierten Schicht eine Schichtdicke im Bereich von 10 bis 1000 µm aufweisen, bevorzugt im Bereich von 30 bis 300 µm, besonders bevorzugt im Bereich von 70 bis 160 µm oder von 101 bis 160 µm, ganz besonders bevorzugt im Bereich von 110 bis 130 µm.

Bevorzugt ist ein Reifen wie vorstehend beschrieben oder wie vorstehend als bevorzugt beschrieben, wobei die zweite und/oder vierte Schicht zusätzlich zum zweiten Zwischenmaterial mindestens einen Füllstoff umfasst.

Bevorzugt ist ein Reifen wie vorstehend beschrieben oder wie vorstehend als bevorzugt beschrieben, wobei der mindestens eine Füllstoff
- der zweiten Schicht Ruß und/oder Silica ist,
   und/oder
- der vierten Schicht Ruß und/oder Silica ist.

Bevorzugt ist ein Reifen wie vorstehend beschrieben oder wie vorstehend als bevorzugt beschrieben, wobei der mindestens eine Füllstoff
- in der zweiten Schicht und/oder
- in der vierten Schicht oder
in einer Menge im Bereich von 0,1 Gew.-% bis 50 Gew.-%, bevorzugt im Bereich von 1 Gew.-% bis 20 Gew.-%, besonders bevorzugt im Bereich von 1 Gew.-% bis 10 Gew.-%, ganz besonders bevorzugt im Bereich von 3 Gew.-% bis 7 Gew.-%, jeweils bezogen auf die Gesamtmasse der ersten oder fünften Schicht der Vorrichtung.

Bevorzugt ist ein Reifen wie vorstehend beschrieben oder wie vorstehend als bevorzugt beschrieben, wobei
- das erste Zwischenmaterial der zweiten Schicht eine dielektrische Leitfähigkeit εᵣ von größer als 1,01 F·m⁻¹ aufweist, bevorzugt von größer als 1,1 F·m⁻¹,
   und/oder
- das zweite Zwischenmaterial der vierten Schicht eine dielektrische Leitfähigkeit eᵣ von größer als 1,01 F·m⁻¹ aufweist, bevorzugt von größer als 1,1 F·m⁻¹.

Bevorzugt ist ein Reifen wie vorstehend beschrieben oder wie vorstehend als bevorzugt beschrieben, wobei die Differenz zwischen der spezifischen triboelektrischen Affinität des ersten Zwischenmaterials der zweiten Schicht und der spezifischen triboelektrischen Affinität des zweiten Zwischenmaterials der vierten Schicht bei mindestens 20 nC/J liegt, gemessen bei 20°C und bei 35% relativer Luftfeuchtigkeit.

Bevorzugt ist ein Reifen wie vorstehend beschrieben oder wie vorstehend als bevorzugt beschrieben, wobei
- das erste Zwischenmaterial der zweiten Schicht ein festes Material umfasst oder hauptsächlich aus einem festen Material besteht ausgesucht aus der Gruppe bestehend aus Polyurethan, einem Glimmer, Glas, Quarz, Seide, Poly(organo)siloxane, Cellulose und deren Mischungen, und/oder
- das zweite Zwischenmaterial der vierten Schicht ein festes Material umfasst oder hauptsächlich aus einem festen Material besteht ausgesucht aus der Gruppe bestehend aus Azetatseide, natürlichem oder synthetischem Kautschuk, Polyester, Polyethylen, Polyethylen-Terphthalate, Polypropylen, Polystyrol, Polychlorobutadien, Polyacrilonitril, Polyvinylchlorid, Poly(organo)siloxane, vulkanisierte Kautschukpartikel, Füllstoffe und deren Mischungen, wobei als natürlicher oder synthetischer Kautschuk die Kautschuke NR, ENR, BR, SBR, SSBR, PDMS, ESBR und Epichlorhydrin-Kautschuk bevorzugt sind.

Bevorzugt ist ein Reifen wie vorstehend beschrieben oder wie vorstehend als bevorzugt beschrieben, wobei
- das erste Zwischenmaterial der zweiten Schicht ein festes Material umfasst oder hauptsächlich aus einem festen Material besteht ausgesucht aus der Gruppe bestehend aus Polyurethan, einem Glimmer, Glas, Quarz, Seide, Poly(organo)siloxane, Cellulose und deren Mischungen, und/oder
- das zweite Zwischenmaterial der vierten Schicht ein festes Material umfasst oder hauptsächlich aus einem festen Material besteht ausgesucht aus der Gruppe bestehend aus Azetatseide, natürlichem oder synthetischem Kautschuk, Polychlorobutadien, Polyacrilonitril, vulkanisierte Kautschukpartikel, Füllstoffe und deren Mischungen und weiterhin optional Poly(organo)siloxane, wobei als natürlicher oder synthetischer Kautschuk die Kautschuke NR, ENR, BR, SBR, SSBR, PDMS, ESBR und Epichlorhydrin-Kautschuk bevorzugt sind.

Bevorzugt ist ein Reifen wie vorstehend beschrieben oder wie vorstehend als bevorzugt beschrieben, wobei
- das erste Zwischenmaterial der zweiten Schicht ein festes Material umfasst oder hauptsächlich aus einem festen Material besteht ausgesucht aus der Gruppe bestehend aus Polyurethan, Poly(organo)siloxane, Cellulose und deren Mischungen, und/oder
- das zweite Zwischenmaterial der vierten Schicht ein festes Material umfasst oder hauptsächlich aus einem festen Material besteht ausgesucht aus der Gruppe bestehend aus natürlichem Kautschuk, Polyester, Epichlorhydrin-Kautschuk, Polyethylen-Terphthalate, Polystyrol, Polychlorobutadien, Polyacrilonitril, Polyvinylchlorid und deren Mischungen und weiterhin optional Poly(organo)siloxane.

Bevorzugt ist ein Reifen wie vorstehend beschrieben oder wie vorstehend als bevorzugt beschrieben, wobei das zweite Zwischenmaterial der vierten Schicht
- Epichlorhydrin-Kautschuk umfasst oder
- hauptschlich oder gänzlich aus Epichlorhydrin-Kautschuk besteht
   und/oder
das erste Zwischenmaterial der zweiten Schicht
- Poly(organo)siloxane, bevorzugt PDMS, umfasst oder
- hauptschlich oder gänzlich aus Poly(organo)siloxanen, bevorzugt PDMS, besteht.

Bevorzugt ist ein Reifen wie vorstehend beschrieben oder wie vorstehend als bevorzugt beschrieben, wobei die Vorrichtung eine dritte Schicht zwischen der zweiten und vierten Schicht umfasst und die dritte Schicht ein Isolationsmaterial umfasst.

Bevorzugt ist ein Reifen wie vorstehend beschrieben oder wie vorstehend als bevorzugt beschrieben, wobei die dritte Schicht ein Isolationsmaterial aufweist, welches bei 20°C eine spezifische elektrische Leitfähigkeit von weniger als 10⁻¹ S·cm⁻¹ aufweist.

Bevorzugt ist ein Reifen wie vorstehend beschrieben oder wie vorstehend als bevorzugt beschrieben, wobei die dritte Schicht
- eine Stützumrandung bestehend aus einem vulkanisierten Kautschuk oder einem Duroplasten umfasst und in der Stützumrandung eine Mischung vorliegt, wobei die Mischung ein oder mehrere Gase und/oder aus einem Isolationsmaterial bestehende Partikel umfasst, wobei die Stützumrandung bevorzugt eine Dicke von 0 bis 200 µm und/oder eine elektrische Leitfähigkeit von höchsten 10 µS/m aufweist, oder
- als Isolationsmaterial eine Flüssigkeit mit einer Viskosität bei 20 °C im Bereich von 0,1 mPa·s bis 10⁶ mPa·s ist, wobei die Viskosität mittels eines Rotationsviskosimeters gemäß DIN EN ISO 3219 gemessen wurde.

Bevorzugt ist ein Reifen wie vorstehend beschrieben oder wie vorstehend als bevorzugt beschrieben, wobei
- die Vorrichtung im Laufstreifen des Reifens angebracht ist und/oder
- die Mittelachse der Vorrichtung in radialer Richtung, in axiale Richtung oder in Umlaufrichtung des Reifens verläuft, bevorzugt in axiale Richtung oder in Umlaufrichtung des Reifens, besonders bevorzugt in Umlaufrichtung des Reifens.

Die vorstehend beschriebenen vorteilhaften Aspekte einer erfindungsgemäßen Vorrichtung zum Messen einer mechanischen Kraft oder eines erfindungsgemäßen Reifen oder technischen Gummiartikels gelten auch für sämtliche Aspekte einer der nachstehend beschriebenen Verwendungen einer Vorrichtung und die nachstehend diskutierten vorteilhaften Aspekte einer der nachstehend beschriebenen erfindungsgemäßen Verwendungen einer Vorrichtung gelten entsprechend für sämtliche Aspekte einer erfindungsgemäßen Vorrichtung zum Messen einer mechanischen Kraft oder eines erfindungsgemäßen Reifen oder technischen Gummiartikels.

Die Erfindung betrifft auch eine Verwendung einer Vorrichtung wie vorstehend beschrieben oder wie vorstehend als bevorzugt beschrieben zum Messen einer mechanischen Kraft entlang der Quererstreckung der dritten Schicht der erfindungsgemäßen Vorrichtung oder entlang der Mittelpunktsachse der erfindungsgemäßen Vorrichtung.

Die Erfindung betrifft auch eine Verwendung einer Vorrichtung wie vorstehend beschrieben oder wie vorstehend als bevorzugt beschrieben
- zum Erzeugen einer elektrischen Spannung, bevorzugt im Reifen, und/oder
- zum Messen einer mechanischen Kraft entlang der Umlaufrichtung oder der axialen Richtung in einem Reifen.

Die Erfindung betrifft auch eine Verwendung einer Vorrichtung wie vorstehend beschrieben oder wie vorstehend als bevorzugt beschrieben zur Erzeugung einer elektrischen Spannung zwischen der ersten und der fünften Schicht der Vorrichtung oder zwischen der zweiten Schicht und der vierten Schicht der Vorrichtung, wobei die Spannung bevorzugt dazu verwendet wird einen Energiespeicher, wie beispielsweise eine Batterie oder einen anderen Akkumulator am Rad oder Reifen aufzuladen. Hierbei wird also die auf die erfindungsgemäße Vorrichtung wirkende Kraft in im Energiespeicher gespeicherte Ladung umgewandelt.

Weitere vorteilhafte Aspekte der vorliegenden Erfindung sind im Folgenden als Aspekte aufgeführt, wobei sich die Zahlen in den Klammern auf die Bezugszeichen in den angehängten Figuren beziehen:
1. Vorrichtung zum Messen einer mechanischen Kraft (12), umfassend eine erste, zweite, dritte, vierte und fünfte Schicht (1, 2, 3, 4, 5),
   dadurch gekennzeichnet, dass
   a) die erste Schicht (1) ein erstes Elektrodenmaterial umfasst,
   b) die zweite Schicht (2) ein erstes Zwischenmaterial mit einer dielektrischen Leitfähigkeit eᵣ von größer als 1,01 F·m⁻¹ umfasst,
   c) die dritte Schicht (3) ein Isolationsmaterial (9) umfasst,
   d) die vierte Schicht (4) ein zweites Zwischenmaterial mit einer dielektrischen Leitfähigkeit eᵣ von größer als 1,01 F·m⁻¹ umfasst,
      und
   e) die fünfte Schicht (5) ein zweites Elektrodenmaterial umfasst,
   wobei
   - das erste Zwischenmaterial der zweiten Schicht (2) und das zweite Zwischenmaterial der vierten Schicht (4) unterschiedlich sind,
   - die fünf Schichten übereinander angeordnet sind,
   - die zweite und vierte Schicht (2, 4) in einem ersten Zustand der Vorrichtung (6) mittels der dritten Schicht (3) voneinander getrennt werden
      und
   - die dritte Schicht (3) so ausgelegt ist, dass die zweite und vierte Schicht (2, 4) in einem zweiten Zustand der Vorrichtung (6) miteinander in Kontakt treten können.
2. Vorrichtung nach Aspekt 1, wobei
   das Isolationsmaterial (9) der dritten Schicht (3) bei 20°C eine elektrische Leitfähigkeit von weniger als 10⁻¹ S·cm⁻¹ aufweist.
3. Vorrichtung nach einem der vorangehenden Aspekte, wobei
   das erste Zwischenmaterial der zweiten Schicht (2) eine dielektrische Leitfähigkeit εᵣ von größer als 1,1 F·m⁻¹ aufweist
      und/oder
   das zweite Zwischenmaterial der vierten Schicht (4) eine dielektrische Leitfähigkeit eᵣ von größer als 1,1 F·m⁻¹ aufweist.
4. Vorrichtung nach einem der vorangehenden Aspekte, wobei die Differenz zwischen der spezifischen triboelektrischen Affinität des ersten Zwischenmaterials der zweiten Schicht (2) und der spezifischen triboelektrischen Affinität des zweiten Zwischenmaterials der vierten Schicht (4) bei mindestens 20 nC/J liegt, gemessen bei 20°C und bei 35% relativer Luftfeuchtigkeit.
5. Vorrichtung nach einem der vorangehenden Aspekte, wobei die dritte Schicht (3)
   - aus einer Mischung besteht, wobei die Mischung ein Gas und aus dem Isolationsmaterial (9) bestehende Partikel umfasst,
      oder
   - als Isolationsmaterial (9) eine Flüssigkeit mit einer Viskosität bei 20 °C im Bereich von 0,1 mPa·s bis 10⁶ mPa·s aufweist.
6. Vorrichtung nach einem der vorangehenden Aspekte, wobei
   - das erste Zwischenmaterial der zweiten Schicht (2) ein festes Material umfasst oder hauptsächlich aus einem festen Material besteht ausgesucht aus der Gruppe bestehend aus Polyurethan, Aluminium, Polyamid, einem Glimmer, Glas, Polyacrylate, Quarz, Blei, Seide, Cellulose und deren Mischungen,
      und/oder
   - das zweite Zwischenmaterial der vierten Schicht (4) ein festes Material umfasst oder hauptsächlich aus einem festen Material besteht ausgesucht aus der Gruppe bestehend aus Azetatseide, natürlichem oder synthetischem Kautschuk, Polyester, Polyethylen, Polyethylen-Terphthalate, Polypropylen, Polystyrol, Polychlorobutadien, Polyacrilonitril, Polyvinylchlorid, Poly(organo)siloxane, Teflon, Polyimide, vulkanisierte Kautschukpartikel, Füllstoffe und deren Mischungen, wobei als natürlicher oder synthetischer Kautschuk die Kautschuke BR, SBR, SSBR, PDMS, ISBR und Epichlorhydrin-Kautschuk bevorzugt sind.
7. Vorrichtung nach einem der vorangehenden Aspekte, wobei Vorrichtung (6) zusätzlich eine Stabilisationshülle (7) zur Vergrößerung der mechanischen Stabilität der Vorrichtung (6) umfasst, welche die Gesamtheit der fünf Schichten (1, 2, 3, 4, 5) umschließt.
8. Reifen (24) oder technischer Gummiartikel umfassend eine Vorrichtung (6) nach einem der vorangehenden Aspekte und Mittel (13) zur Messung der Spannung zwischen der ersten und der fünften Schicht (1, 5) der Vorrichtung (6).
9. Reifen nach Aspekt 8, wobei
   die Vorrichtung (6) im Laufstreifen (25) des Reifens (24) angebracht ist
      und
   die Mittelachse (19) der Vorrichtung (6) in axiale Richtung (14) oder in Umlaufrichtung (15) des Reifens (6) verläuft.
10. Verwendung einer Vorrichtung nach einem der Aspekte 1 bis 7 zum Messen einer mechanischen Kraft (12) entlang der Quererstreckung (18) der dritten Schicht (3) der Vorrichtung (6).
11. Verwendung einer Vorrichtung nach einem der Aspekte 1 bis 7 zur Erzeugung einer elektrischen Spannung zwischen der ersten und der fünften Schicht (1, 5) der Vorrichtung (6).

### Figurenbeschreibung:

- Figur 1:: Querschnitt einer schematisch dargestellten erfindungsgemäßen Vorrichtung in einem ersten Zustand bevor Anwendung einer mechanischen Kraft, wobei die Schnittebene des Querschnitts parallel zur Mittelachse der Vorrichtung verläuft;
- Figur 2:: Querschnitt einer schematisch dargestellten erfindungsgemäßen Vorrichtung in einem zweiten Zustand während Anwendung einer mechanischen Kraft, wobei die Schnittebene des Querschnitts parallel zur Mittelachse der Vorrichtung verläuft;
- Figur 3:: Querschnitt einer schematisch dargestellten erfindungsgemäßen Vorrichtung in einem dritten Zustand nach Anwendung einer mechanischen Kraft, wobei die Schnittebene des Querschnitts parallel zur Mittelachse der Vorrichtung verläuft;
- Figur 4:: Querschnitt eines schematisch dargestellten erfindungsgemäßen Reifens, wobei die Schnittebene des Querschnitts senkrecht zur axialen Richtung des Reifens verläuft;
- Figur 5:: eine schematische Darstellung einer Messvorrichtung zur Ermittlung der elektrischen Leistung einer erfindungsgemäßen Vorrichtung.

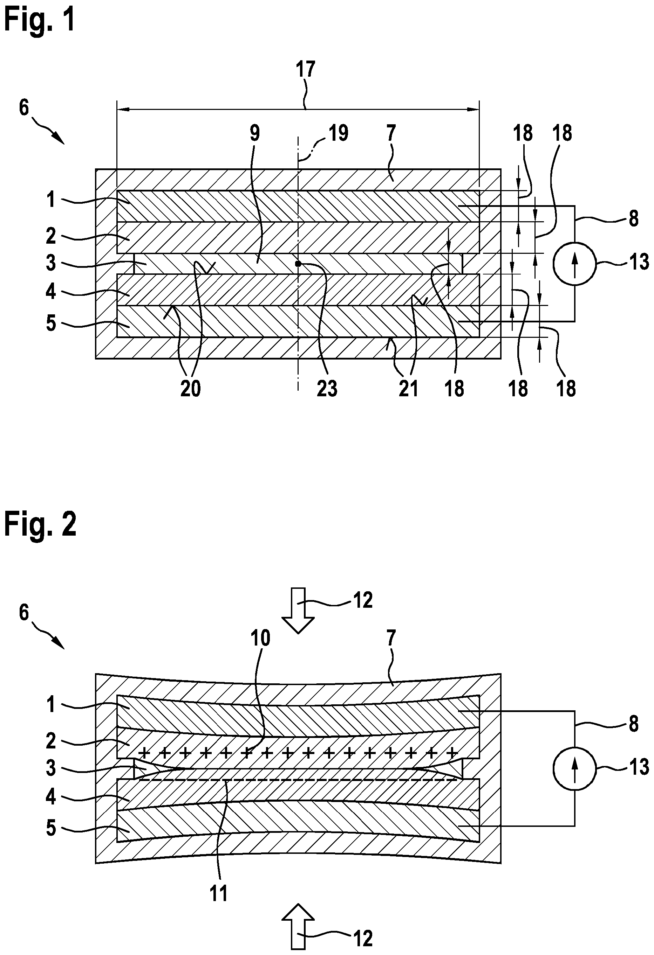

Fig. 1 zeigt eine schematische Darstellung einer erfindungsgemäßen Vorrichtung 6 umfassend fünf Schichten 1,2,3,4,5, einen Spannungsmesser 13 und eine Stabilisationshülle 7 in einer Ausführungsform. Dargestellt ist in Fig. 1 eine Querschnittsansicht der erfindungsgemäßen Vorrichtung 6, wobei die Schnittebene des Querschnitts parallel zur Mittelachse 19 der Vorrichtung 6 verläuft. Die Mittelachse 19 der Vorrichtung 6 verläuft parallel zur Quererstreckung 18 der verschiedenen Schichten und durch den geometrischen Mittepunkt 23 der dritten Schicht 3 einer erfindungsgemäßen Vorrichtung 6 sowie senkrecht zur Längserstreckung 17 der verschiedenen Schichten (dargestellt ist nur die Längserstreckung 17 der ersten Schicht 1 in Figur 1). In Fig. 1 sind auch die Längsflächen 20 der vierten Schicht 4 und die Längsflächen 21 der fünften Schicht 5 schematisch im Querschnitt gezeigt. Zudem ist in Fig. 1 schematisch dargestellt, dass die dritte Schicht 3 wie vorstehend beschrieben eine kompressierbare Verbindung 9 mit einem Kompressionsmodul und als Beispiel eines Isolationsmaterials umfasst. Die in Fig. 1 dargestellte Vorrichtung 6 befindet sich in einem ersten Zustand, wobei keine mechanische Kraft von außen auf die erfindungsgemäße Vorrichtung 6 einwirkt. In diesem ersten Zustand trennt die dritte Schicht 3 die zweite Schicht 2 von der vierten Schicht 4. Da kein Kontakt zwischen der zweiten Schicht 2 und der vierten Schicht 4 in dem ersten Zustand der erfindungsgemäßen Vorrichtung 6 vorliegt, können keine Elektronen zwischen der zweiten Schichte 2 und der vierten Schichte 4 übertragen werden.

Fig. 2 zeigt eine schematische Darstellung einer erfindungsgemäßen Vorrichtung 6 umfassend fünf Schichten 1, 2, 3, 4, 5, einen Spannungsmesser 13 und eine Stabilisationshülle 7 in einer weiteren Ausführungsform. Dargestellt ist in Fig. 2 eine Querschnittsansicht der erfindungsgemäßen Vorrichtung 6, wobei die Schnittebene des Querschnitts parallel zur Mittelachse 19 der Vorrichtung 6 verläuft. Die Mittelachse 19 der Vorrichtung 6 verläuft parallel zur Quererstreckung der fünf Schichten 1, 2, 3, 4, 5 und senkrecht zur Längserstreckung 17 der fünf Schichten 1, 2, 3, 4, 5, sowie durch den geometrischen Mittepunkt 23 der dritten Schicht 3 einer erfindungsgemäßen Vorrichtung 6. In Fig. 2 ist schematisch dargestellt, dass die dritte Schicht 3 kompressiert ist, da auf die erfindungsgemäße Vorrichtung 6 eine mechanische Kraft 12 wirkt. Die in Fig. 2 dargestellte Vorrichtung 6 befindet sich daher in dem zweiten Zustand, welcher dem ersten Zustand zeitlich folgt, wobei bei dem in Figur 2 dargestellten Beispiel die mechanische Kraft 12 von oben und von unten auf die erfindungsgemäße Vorrichtung 6 einwirkt. In diesem zweiten Zustand stehen die zweite Schicht 2 und die vierte Schicht 4 miteinander in Kontakt. Der Kontakt zwischen der zweiten Schicht 2 und der vierten Schicht 4 in dem zweiten Zustand der erfindungsgemäßen Vorrichtung 6 ermöglicht, dass Elektronen 11 von der zweiten Schicht 2 zu der vierten Schicht 4 übertragen werden können und so die vierte Schicht 4 mit zusätzlichen negativen Ladungen 11 in Form von übertragenen Elektronen angereichert werden kann. Dies ermöglicht noch nicht das Zustandekommen einer elektrischen Spannung zwischen der ersten und fünften Schicht, welche erst beim Entfernen der zweiten Schicht 2 und der vierten Schicht 4 voneinander auftritt.

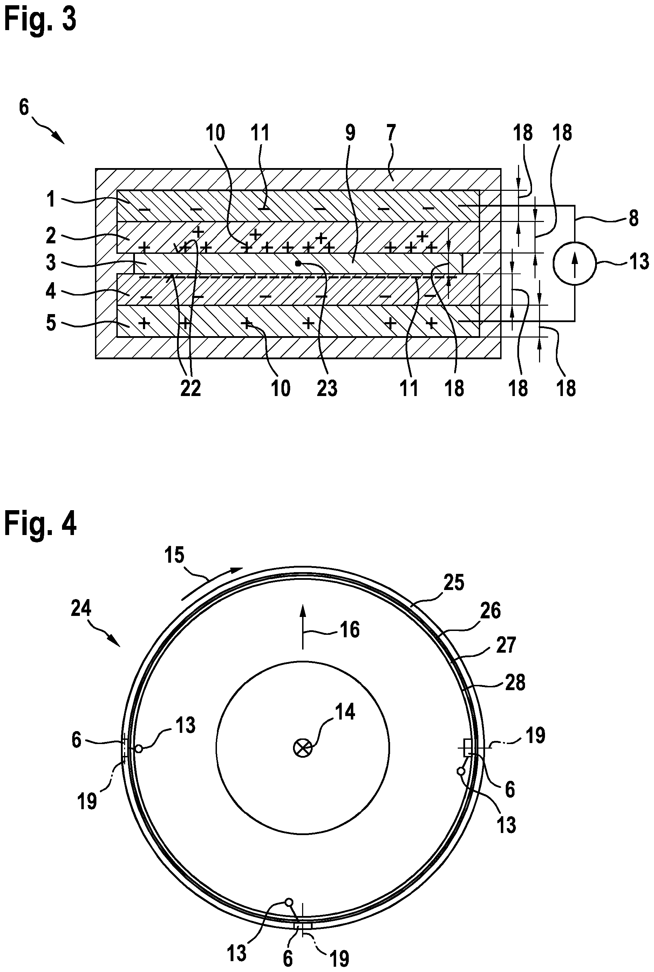

Fig. 3 zeigt eine schematische Darstellung einer erfindungsgemäßen Vorrichtung 6 umfassend fünf Schichten 1, 2, 3, 4, 5, einen Spannungsmesser 13 und eine Stabilisationshülle 7 in einer weiteren Ausführungsform. Dargestellt ist in Fig. 3 eine Querschnittsansicht der erfindungsgemäßen Vorrichtung 6, wobei die Schnittebene des Querschnitts parallel zur Mittelachse 23 der Vorrichtung 6 verläuft. Die Mittelachse 23 der Vorrichtung 6 verläuft parallel zur Quererstreckung der fünf Schichten 1, 2, 3, 4, 5 und senkrecht zur Längserstreckung der fünf Schichten 1, 2, 3, 4, 5, sowie durch den geometrischen Mittepunkt 23 der dritten Schicht 3 einer erfindungsgemäßen Vorrichtung 6. In Fig. 3 sind auch die Längsflächen 22 der dritten Schicht 3 schematisch gezeigt. Zudem ist in Fig. 3 schematisch im Querschnitt dargestellt, dass die dritte Schicht 3 eine kompressierbare Verbindung 9 mit einem Kompressionsmodul wie vorstehend beschrieben umfasst. Die in Fig. 3 dargestellte Vorrichtung 6 befindet sich in einem dritten Zustand, welcher sich vom ersten Zustand einer erfindungsgemäßen Vorrichtung 6 nur dadurch unterscheidet, dass die Verteilung der Elektronen unter der ersten, zweiten, vierten und fünften Schicht 1, 2, 4, 5 unterschiedlich im Vergleich zum ersten Zustand ist. In diesem dritten Zustand trennt die dritte Schicht 3 die zweite Schicht 2 von der vierten Schicht 4, wobei die zweite Schicht 2 weniger Elektronen, d.h. fehlende negative Ladungen 10, umfasst im Vergleich zum ersten Zustand der erfindungsgemäßen Vorrichtung 6. Die vierte Schicht 4 umfasst nun zusätzlich die übertragenen Elektronen 11 im Vergleich zum ersten Zustand der erfindungsgemäßen Vorrichtung 6. Um diese elektrische Ladungsdifferenz auszugleichen, können nun Elektronen aus der fünften Schicht 5 in die erste Schicht 1 fließen. Je weiter sich die zweite Schicht 2 und vierte Schicht 4 voneinander entfernen, desto höher ist die Spannung zwischen der fünften Schicht 5 und der ersten Schicht 1. Die Ladungsverteilung zwischen der vierten Schicht 4 und zweiten Schicht 2 bleibt dabei betragsmäßig gleich.

Dieser Fluss der Elektronen wird umgekehrt, sobald sich die vierte Schicht 4 und zweite Schicht 2 wieder nähern bis sie sich berühren, also wieder in den zweiten Zustand wie in Figur 2 dargestellt übergehen. Die erfindungsgemäße Vorrichtung 6 kann somit nun beliebig oft durch Anlegen einer mechanischen Kraft vom zweiten in den dritten Zustand oder vom dritten in den zweiten Zustand überführt werden und somit können die Elektronen wie vorstehend beschrieben immer abwechselnd von der fünften Schicht 5 in die erste Schicht 1 bzw. umgekehrt verschoben werden.

Fig. 4 zeigt eine schematische Darstellung eines erfindungsgemäßen Reifens 24 umfassend drei erfindungsgemäße Vorrichtungen 6 zur Messung einer mechanischen Kraft gemäß einer weiteren Ausführungsform in Querschnittsansicht, wobei die Schnittebene des Querschnitts senkrecht zur Rotationsachse 14 des Reifens 24 verläuft. Die drei erfindungsgemäßen Vorrichtungen 6 sind im Laufstreifen 25 oder am Innerliner 28 des erfindungsgemäßen Reifens 24 angeordnet, wobei die Mittelachse 19 der einen erfindungsgemäßen Vorrichtung 6 parallel zur Umlaufrichtung 15 oder parallel zur radialen Richtung 16 des erfindungsgemäßen Reifens 24 verläuft. Je nachdem in welche Richtung die Mittelachse 19 einer erfindungsgemäßen Vorrichtung 6 im Laufstreifen 25 eines erfindungsgemäßen Reifens 24 verlaufen, können besonders gut solche mechanischen Kräfte gemessen werden, welche parallel zur Mittelachse 19 der erfindungsgemäßen Vorrichtung 6 verlaufen. Verläuft die Mittelachse 19 der erfindungsgemäßen Vorrichtung 6 also parallel zur Umlaufrichtung 15, so können insbesondere gut die Brems- und Beschleunigungskräfte während des Fahrens mit einem erfindungsgemäßen Reifen 6 gemessen werden. Verläuft die Mittelachse 19 der erfindungsgemäßen Vorrichtung 6 parallel zur Rotationsachse 14, so können insbesondere gut die Seitenkräfte gemessen werden, welche beim Kurvenfahren mit einem erfindungsgemäßen Reifen 6 entstehen. Verläuft die Mittelachse 19 einer erfindungsgemäßen Vorrichtung 6 im Laufstreifen 25 parallel zur radialen Richtung 16 des erfindungsgemäßen Reifens 6, so wirken immer dann besonders starke mechanische Kräfte auf die erfindungsgemäße Vorrichtung 6, wenn die erfindungsgemäße Vorrichtung 6 in dem Teil des Laufstreifens 25 ist, welcher den sogenannten Footprint des erfindungsgemäßen Reifens 6 darstellt.

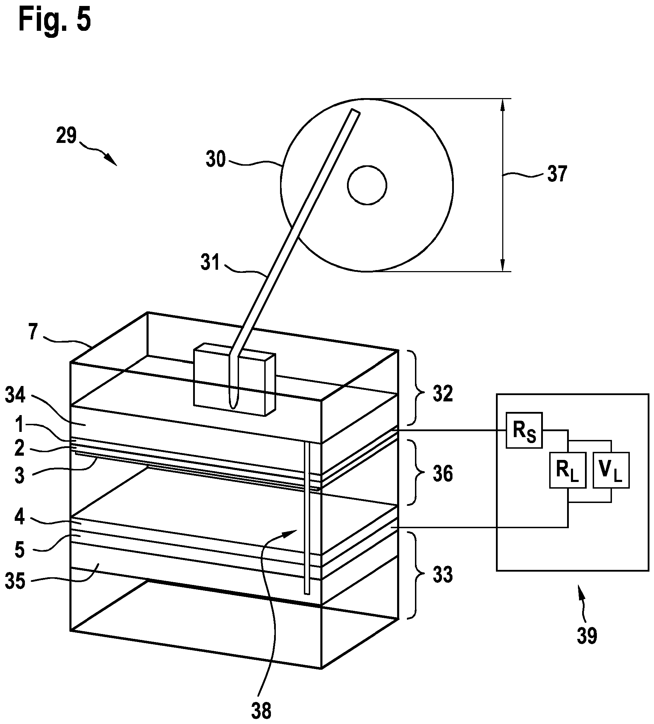

Fig. 5 zeigt eine schematische Darstellung einer Messvorrichtung 29 zur Ermittlung der Leistung einer erfindungsgemäßen Vorrichtung 1 in einer weiteren Ausführungsform, wobei die Messvorrichtung eine erfindungsgemäße Vorrichtung 1, ein Schwingrad 30 mit Kolben 31 und eine Stabilisationshülle 7 mit Polycarbonat-Stempel 34 und Polycarbonat-Basis 35. Die Stabilisationshülle 7 umfasst zusätzlich eine Umrandung 38 aus Polycarbonat mit Löchern. Die Löcher der Umrandung 38 dienen einem problemlosen Entweichen und Füllen des Innenraums der Umrandung 38 mit Luft während der Rotation des Schwingrades 30. Durch die Rotation des Schwingrades 30 wird das Oberteil 32 der Messvorrichtung 29 mit dem Stempel 34 und der ersten und zweiten Schicht 1, 2 auf- und abbewegt. Die Rotation erfolgte wenn nicht anders angegeben mit der Frequenz von 5 Hz, also 5 Umdrehung pro Sekunde. Dabei konnte ein an die erste und zweite Elektrodenschicht 1, 5, d.h. an die erste und fünfte Schicht 1, 5 der erfindungsgemäßen Vorrichtung 6, angeschlossenes Oszilloskop 39 die zwischen der ersten und zweiten Elektrodenschicht 1, 5 erzeugte Leerlaufspannung über die Formel V₀ = V_{L} / (R_{S} + R_{L}) sowie die dazugehörige Leerlaufstromstärke ermittelt. Der Stromkreis des Oszilloskops 39 ist in Figur 5 mit der Spannungsquelle V_{L} und den Widerständen R_{S} und R_{L} schematisch dargestellt, wobei die Kontakte zum angezeigten Stromkreis jeweils an der ersten Schicht 1 und an der fünften Schicht 5 der erfindungsgemäßen Vorrichtung 1 angeschlossen sind.

### Experimentelle Beispiele:

### Messmethoden:

1. Oberflächenrauheit Rₐ
   Die Ergebnisse wurden in Anlehnung an die Methode DIN EN ISO 4288:1998 ermittelt.
2. Elektrische Messung bei Open-Circuit-Bedingungen
   Die Werte für die Leerlaufspannung und Leerlaufstromstärke wurden mittels des Oszilloskops "Rigol Oscilloscope DS 4014" bei Verwendung der in Figur 5 gezeigten Messvorrichtung mit einer Drehfrequenz des Schwingrades von 5 Hz gemessen. Der Durchmesser des Schwingrades betrug 4 cm und der maximale Abstand zwischen der zweiten und vierten Schicht bei einer Rotation betrug 2,5 cm und der minimale Abstand betrug 0 cm. Das Oszilloskop hatte dabei die folgenden Einstellungen:
   Attentuation ratio: 10 : 1
   Input resistance: 10 MΩ ± 2%
   Input capacitance: 13 pF ± 3pF
   Maximum input CAT II 300 VAC
   Compensation range: 6pF - 24pF.

Durch die Rotation des Schwingrades wurden die zweite und viertel Schicht periodisch aneinandergedrückt und wieder voneinander entfernt. Somit werden messbare Spannungen zwischen den Elektroden, d.h. zwischen der ersten und fünften Schicht, gemessen und daraus entsprechende Stromflüsse für den Leerlauf bzw. Open-Circuit ermittelt, auch Leerlaufstromflüsse genannt. Diese messbaren Leerlaufspannungen und daraus bestimmten Leerlaufstromstärken wurden vom Oszilloskop in Form von periodischen Peaks aufgezeichnet, wobei die Periode der Peaks der Drehfrequenz des Schwingrades entsprach. Die in den Tabellen 2 bis 4 aufgezeichneten Werte für die Leerlaufspannung und Leerlaufstromstärke entsprechen jeweils dem Wert der Differenz vom Maximum bis zum Minimum der gemessenen Peaks. Entsprechende Versuche, bei denen eine erfindungsgemäße Vorrichtung wie vorstehend beschrieben ohne dritte Schicht verwendet wurde, d.h. bei denen die zweite und vierte Schicht sich durchgehend berührten, und nur die auf die zweite und vierte Schicht wirkende Kraft geändert wurden, ergaben die gleichen Trends wie die nachstehend gezeigten Versuchsergebnisse.

### Herstellung:

**Tabelle 1: Zusammensetzungen der verwendeten zweiten und vierten Schichten der erfindungsgemäßen Vorrichtung:**

| **Material** | **Menge** | **2. Schicht** | **3. Schicht** | **4. Schicht** |
|---|---|---|---|---|
| GECO | phr | --- | --- | 100 |
| PDMS | phr | 100 | --- | --- |
| Füllstoff | phr | --- | --- | s. Tabelle 2 |
| ZnO | phr | --- | --- | 3 |
| Stearinsäure | phr | --- | --- | 2 |
| TMTD | phr | --- | --- | 2,5 |
| MBTS | phr | --- | --- | 1 |
| Dicumylperoxid | phr | 0,2 | --- | --- |
| Schwefel | phr | --- | --- | 1 |
| Luft | Gew.-% | --- | 100 | --- |

| | | | | |
|---|---|---|---|---|
| *GECO = Terpolymer aus Epichlorhydrin, Ethylenoxid und Allyl-gycidyl-Ether; ** PDMS = Polydimethylsiloxan | | | | |

Die Herstellung der zweiten Schicht aus PDMS und der vierten Schicht aus GECO erfolgt nach einem üblichen im Stand der Technik bekannten Herstellungsverfahren, welches die Schritte Anmischen, Walzen und Vulkanisieren der jeweiligen Kautschukmischung nach Tabelle 1 für die zweite und vierte Schicht umfasste. Das Anmischen der jeweiligen Kautschukmischung wurde nach Zugabe der Bestandteile in einen Banbury-Mischer bei 70 °C mit einer Rotorgeschwindigkeit von 60 rpm während 8 Minuten durchgeführt. Das Auswalzen erfolgte mit einer Zwei-Rollen-Mühle (zu Englisch: "two-roll mill") während 10 Minuten, sodass eine Schichtdicke von 120 µm in der fertig vulkanisierten Schicht erreicht wurde (mit Ausnahme der vierten Schicht in den Experimenten E7 und E8 in Tabelle 4). Die Vulkanisation wurde in einer rechteckigen Vulkanisationsform bei den üblichen Temperaturen von 120 °C für 10 Minuten durchgeführt. Die so hergestellten Schichten hatten eine Länge von 100 mm und Höhe von 30 mm.

Für die angerauten Oberflächen der vierten Schichten der Beispiele E5 und E6 wurde bei deren Vulkanisation eine durch Sandstrahlen angerautes Formsegment in der Vulkanisationsform verwendet. Das Sandstrahlen auf dem entsprechenden Formsegment erfolgt derart, dass Oberflächenrauigkeiten Rₐ von 5 µm gemäß Methode DIN EN ISO 4288:1998 auf der der dritten Schicht zugewandten Seite erreicht wurden.

### Messergebnisse:

### Füllstoffanteil:

**Tabelle 2: Experimentelle Daten der erfindungsgemäßen Vorrichtung mit variierenden Füllstoffanteilen:**

| **Eigenschaft** | **Einheit** | **Exp. V0** | **Exp. E1** | **Exp. E2** | **Exp. E3** | **Exp. E4** |
|---|---|---|---|---|---|---|
| **Verwendete Materialien der Schichten einer erfindungsgemäßen Vorrichtung** | | | | | | |
| 1. Schicht | | Kupfer | Kupfer | Kupfer | Kupfer | Kupfer |
| 2. Schicht | | PDMS | PDMS | PDMS | PDMS | PDMS |
| 3. Schicht | | Luft | Luft | Luft | Luft | Luft |
| 4. Schicht | | GECO | GECO | GECO | GECO | GECO |
| 5. Schicht | | Kupfer | Kupfer | Kupfer | Kupfer | Kupfer |
| | | | | | | |
| Dicke/Quererstreckung der 2. und 4. Schicht | µm | 120 | 120 | 120 | 120 | 120 |
| Füllstoffart in der 4. Schicht (GECO) | | ---- | Silica¹ | Silica¹ | Ruß² | Ruß² |
| Füllstoffgewichtsanteil in der 4. Schicht bezogen auf das Gesamtgewicht der vierten Schicht | phr | 0 | 10 | 40 | 5 | 15 |
| | | | | | | |

| **Ergebnisse** | | | | | | |
|---|---|---|---|---|---|---|
| Leerlaufspannung gemessen von Peak-to-Peak | V | 125 | 185 | 63 | 153 | 97 |
| Leerlaufstromstärke gemessen von Peak-to-Peak | µA | 11 | 24 | 9 | 18 | 20 |

| | | | | | | |
|---|---|---|---|---|---|---|
| ¹ Ultrasil 7000GR, Surface area - 175 m²/g ² Conductive Carbon Black (CCB), Printex XE2, Particle size, < 30 nm, surface area 950 m²/g | | | | | | |

Tabelle 2 kann man entnehmen, dass mit Füllstoffanteilen von 5 bis 40 phr optimale Leistungen erreicht werden können. Dies zeigt, dass Anteile von von 0,1 Gew.-% bis 50 Gew.-%, bezogen auf die Gesamtmasse der zweiten Zwischenschicht (d.h. der vierten Schicht) einer erfindungsgemäßen Vorrichtung, gute Leistungen bringen. Besonders hohe Leistungen wurden im Bereich von 1 Gew.-% bis 10 Gew.-% erreicht (vgl. Experimente E0 ohne Füllstoff, E1 mit 10 phr Silica und E3 mit 5 phr Ruß).

### Oberflächenrauigkeit Rₐ:

**Tabelle 3: Experimentelle Daten der erfindungsgemäßen Vorrichtung mit variierenden Oberflächenrauhigkeiten**

| **Eigenschaft** | **Einheit** | **Exp. V0** | | **Exp. E1** | **Exp. E5** | | **Exp. E3** | **Exp. E6** |
|---|---|---|---|---|---|---|---|---|
| **Verwendete Materialien der Schichten einer erfindungsgemäßen Vorrichtung** | | | | | | | | |
| 1. Schicht | | Kupfer | | Kupfer | Kupfer | | Kupfer | Kupfer |
| 2. Schicht | | PDMS | | PDMS | PDMS | | PDMS | PDMS |
| 3. Schicht | | Luft | | Luft | Luft | | Luft | Luft |
| 4. Schicht | | GECO | | GECO | GECO | | GECO | GECO |
| 5. Schicht | | Kupfer | | Kupfer | Kupfer | | Kupfer | Kupfer |
| | | | | | | | | |
| Füllstoffart in der 4. Schicht (GECO) | | ---- | | Silica¹ | Silica¹ | | Ruß² | Ruß² |
| Dicke/Quererstrecku ng der 2. und 4. Schicht | µm | 120 | | 120 | 120 | | 120 | 120 |
| Füllstoffgewichtsant eil in der 4. Schicht bezogen auf das Gewicht von GECO | phr | 0 | | 10 | 10 | | 5 | 5 |
| Oberflächenrauhigke it Rₐ der 4. Schicht | µm | 0,3 | | 0,3 | 3 | | 0,3 | 3 |
| | | | | | | | | |

| **Ergebnisse** | | | | | | | | |
|---|---|---|---|---|---|---|---|---|
| Leerlaufspannung gemessen von Peak-to-Peak | V | 125 | | 185 | 181 | | 153 | 237 |
| Leerlaufstromstärke gemessen von Peak-to-Peak | µA | 11 | | 24 | 35 | | 18 | 38 |

| | | | | | | | | |
|---|---|---|---|---|---|---|---|---|
| ¹ Ultrasil 7000GR, Surface area - 175 m²/g ² Conductive Carbon Black (CCB), Printex XE2, Particle size, < 30 nm, surface area 950 m²/g | | | | | | | | |

Tabelle 3 kann man entnehmen, dass bei Oberflächenrauhigkeiten Rₐ im Bereich von 0,1 bis 5 µm optimale Leistungen erreicht werden können. Dies gilt auch für die Oberflächenrauhigkeiten Rₐ der zweiten Schicht und für den Bereich von 5 µm bis 100 µm, insbesondere wie in Tabelle 3 gezeigt für den Bereich von 0,3 bis 3 µm.

### Schichtdicken der vierten Schicht:

**Tabelle 4: Experimentelle Daten der erfindungsgemäßen Vorrichtung mit variierender**

| **Eigenschaft** | **Einheit** | **Exp. V0** | **Exp. E7** | **Exp. E8** |
|---|---|---|---|---|
| | | | | |

| **Verwendete Materialien der Schichten der Vorrichtung** | | | | |
|---|---|---|---|---|
| 1. Schicht | | Kupfer | Kupfer | Kupfe |
| 2. Schicht | | PDMS | PDMS | PDMS |
| 3. Schicht | | Luft | Luft | Luft |
| 4. Schicht | | GECO | GECO | GECO |
| 5. Schicht | | Kupfer | Kupfer | Kupfer |
| Füllstoffart in der 4. Schicht | | --- | --- | --- |
| | | | | |
| Dicke/Quererstreckung der 2. Schicht | µm | 120 | 60 | 250 |
| Dicke/Quererstreckung der 4. Schicht | µm | 120 | 120 | 120 |
| | | | | |

| **Ergebnisse** | | | | |
|---|---|---|---|---|
| Leerlaufspannung gemessen von Peak-to-Peak | V | 125 | 61 | 63 |
| Leerlaufstromstärke gemessen von Peak-to-Peak | µA | 11 | 5 | 5 |

Dic ke der zw eite n Sch icht Tab elle 4 kan n man entnehmen, dass mit Schichtdicken im Bereich von 60 bis 250 µm optimale Leistungen erreicht werden können, insbesondere bei einer Schichtdicke mit 120 µm. Dies gilt auch für die Schichtdicke der vierten Schicht. Die Schichtdicke entspricht der Quererstreckung einer Schicht einer erfindungsgemäßen Vorrichtung.

### Bezugszeichenliste:

- 1: erste Schicht
- 2: zweite Schicht
- 3: dritte Schicht
- 4: vierte Schicht
- 5: fünfte Schicht
- 6: Vorrichtung
- 7: Stabilisationshülle
- 8: Kontakte zwischen den Elektrodenmaterialien und den Mittel zur Messung der Spannung
- 9: Isolationsmaterial; kompressierbare Verbindung
- 10: fehlende negative Ladungen
- 11: zusätzliche negative Ladungen; übertragende Elektronen
- 12: einwirkende mechanische Kraft
- 13: Mittel zur Messung der Spannung zwischen der ersten und der fünften Schicht der Vorrichtung; Spannungsmesser
- 14: Rotationsachse; axiale Richtung
- 15: Umlaufrichtung
- 16: radiale Richtung
- 17: Längserstreckung
- 18: Quererstreckung
- 19: Mittelachse der Vorrichtung
- 20: Längsflächen der vierten Schicht
- 21: Längsflächen der fünften Schicht
- 22: Längsflächen der dritten Schicht
- 23: geometrischer Mittelpunkt der dritten Schicht
- 24: Reifen
- 25: Laufstreifen
- 26: Gürtel
- 27: Karkasse
- 28: Innerliner
- 29: Messvorrichtung zur Ermittlung der Leistung einer erfindungsgemäßen Vorrichtung
- 30: Schwingrad zur Auf- und Abbewegung der ersten Schicht (d.h. Kupferelektrode) und zweiten Schicht (d.h. erste Zwischenschicht) der erfindungsgemäßen Vorrichtung
- 31: Kolben zur Verbindung des Schwingrades mit dem Oberteil der Messvorrichtung
- 32: Oberteil der Messvorrichtung umfassend die erste und zweite Schicht der erfindungsgemäßen Vorrichtung
- 33: Unterteil der Messvorrichtung umfassend die vierte und fünfte Schicht der erfindungsgemäßen Vorrichtung
- 34: Stempel aus Polycarbonat
- 35: aus Polycarbonat bestehende Basis zum Befestigen der vierten und fünften Schicht der erfindungsgemäßen Vorrichtung
- 36: Abstand zwischen den Oberflächen der ersten und zweiten Zwischenschicht
- 37: Durchmesser des Schwingrads
- 38: Umrandung aus Polycarbonat mit Löchern zum Entweichen und Füllen des Innenraums der Umrandung mit Luft
- 39: Oszilloskop

## Patentansprüche

1. Reifen umfassend eine Vorrichtung (6), wobei die Vorrichtung (6) eine erste, zweite, dritte, vierte und fünfte Schicht (1, 2, 3, 4 ,5) umfasst, wobei die dritte Schicht (3) optional ist,
wobei a) die erste Schicht (1) ein erstes Elektrodenmaterial umfasst,
b) die zweite Schicht (2) ein erstes Zwischenmaterial umfasst,
d) die vierte Schicht (4) ein zweites Zwischenmaterial umfasst,
und
e) die fünfte Schicht (5) ein zweites Elektrodenmaterial umfasst,
wobei
- das erste Zwischenmaterial der zweiten Schicht (2) eine dielektrische Leitfähigkeit εᵣ von größer als 1,01 F·m⁻¹ aufweist,
und/oder
- das zweite Zwischenmaterial der vierten Schicht (4) eine dielektrische Leitfähigkeit eᵣ von größer als 1,01 F·m⁻¹ aufweist,
**dadurch gekennzeichnet, dass**
- die zweite oder vierte Schicht (2, 4) eine Schichtdicke im Bereich von 10 bis 1000 µm aufweisen,
- das erste Zwischenmaterial der zweiten Schicht (2) und das zweite Zwischenmaterial der vierten Schicht (4) unterschiedlich sind und
- die vier Schichten (1, 2, 4 ,5) oder fünf Schichten (1, 2, 3, 4 ,5) gemäß der vorstehenden Reihenfolge übereinander angeordnet sind.

2. Reifen nach Anspruch 1, wobei die Vorrichtung (6)
- Mittel (13) zur Messung der Spannung zwischen der ersten und der fünften Schicht (1, 5) oder der zweiten und der vierten Schicht (2, 4) der Vorrichtung (6) umfasst
und/oder
- dazu geeignet ist, eine elektrische Spannung zu erzeugen, und eine an einem den Reifen umfassenden Rad angebrachte oder an dem Reifen angebrachte Batterie und/oder Akkumulator elektrisch zu laden.

3. Reifen nach einem der vorangehenden Ansprüche, wobei die zweiten und/oder vierten Schicht (2, 4) eine Schichtdicke im Bereich von 10 bis 1000 µm aufweisen, bevorzugt im Bereich von 30 bis 300 µm, besonders bevorzugt im Bereich von 70 bis 160 µm oder von 101 bis 160 µm, ganz besonders bevorzugt im Bereich von 110 bis 130 µm.

4. Reifen nach einem der vorangehenden Ansprüche, wobei die zweite und/oder vierte Schicht (2, 4) zusätzlich zum zweiten Zwischenmaterial mindestens einen Füllstoff umfasst.

5. Reifen nach Anspruch 4, wobei der mindestens eine Füllstoff
- der zweiten Schicht (2) Ruß und/oder Silica ist,
und/oder
- der vierten Schicht Ruß (4) und/oder Silica ist.

6. Reifen nach einem der vorangehenden Ansprüche, wobei der mindestens eine Füllstoff
- in der zweiten Schicht (2)
und/oder
- in der vierten Schicht (4) oder
in einer Menge im Bereich von 0,1 Gew.-% bis 50 Gew.-%, bevorzugt im Bereich von 1 Gew.-% bis 20 Gew.-%, besonders bevorzugt im Bereich von 1 Gew.-% bis 10 Gew.-%, ganz besonders bevorzugt im Bereich von 3 Gew.-% bis 7 Gew.-%, jeweils bezogen auf die Gesamtmasse der ersten oder fünften Schicht der Vorrichtung.

7. Reifen nach einem der vorangehenden Ansprüche, wobei
- das erste Zwischenmaterial der zweiten Schicht (2) eine dielektrische Leitfähigkeit εᵣ von größer als 1,1 F·m⁻¹ aufweist,
und/oder
- das zweite Zwischenmaterial der vierten Schicht (4) eine dielektrische Leitfähigkeit eᵣ von größer als 1,1 F·m⁻¹ aufweist.

8. Reifen nach einem der vorangehenden Ansprüche, wobei die Differenz zwischen der spezifischen triboelektrischen Affinität des ersten Zwischenmaterials der zweiten Schicht (2) und der spezifischen triboelektrischen Affinität des zweiten Zwischenmaterials der vierten Schicht (4) bei mindestens 20 nC/J liegt, gemessen bei 20°C und bei 35% relativer Luftfeuchtigkeit.

9. Reifen nach einem der vorangehenden Ansprüche, wobei
- das erste Zwischenmaterial der zweiten Schicht (2) ein festes Material umfasst oder hauptsächlich aus einem festen Material besteht ausgesucht aus der Gruppe bestehend aus Polyurethan, einem Glimmer, Glas, Quarz, Seide, Poly(organo)siloxane, Cellulose und deren Mischungen, und/oder
- das zweite Zwischenmaterial der vierten Schicht (4) ein festes Material umfasst oder hauptsächlich aus einem festen Material besteht ausgesucht aus der Gruppe bestehend aus Azetatseide, natürlichem oder synthetischem Kautschuk, Polyester, Polyethylen, Polyethylen-Terphthalate, Polypropylen, Polystyrol, Polychlorobutadien, Polyacrilonitril, Polyvinylchlorid, Poly(organo)siloxane, vulkanisierte Kautschukpartikel, Füllstoffe und deren Mischungen, wobei als natürlicher oder synthetischer Kautschuk die Kautschuke NR, ENR, BR, SBR, SSBR, PDMS, ESBR und Epichlorhydrin-Kautschuk bevorzugt sind.

10. Reifen nach einem der vorangehenden Ansprüche, wobei
das zweite Zwischenmaterial der vierten Schicht
- Epichlorhydrin-Kautschuk, bevorzugt GECO, umfasst
oder
- hauptschlich oder gänzlich aus Epichlorhydrin-Kautschuk, bevorzugt GECO, besteht
und/oder
das erste Zwischenmaterial der zweiten Schicht
- Poly(organo)siloxane, bevorzugt PDMS, umfasst
oder
- hauptschlich oder gänzlich aus Poly(organo)siloxanen, bevorzugt PDMS, besteht.

11. Reifen nach einem der vorangehenden Ansprüche, wobei die Vorrichtung eine dritte Schicht (3) zwischen der zweiten und vierten (2, 4) Schicht umfasst und die dritte Schicht (3) ein Isolationsmaterial umfasst.

12. Reifen nach Anspruch 11, wobei die dritte Schicht (3) ein Isolationsmaterial aufweist, welches bei 20°C eine spezifische elektrische Leitfähigkeit von weniger als 10⁻¹ S·cm⁻¹ aufweist.

13. Reifen nach Anspruch 11 oder Anspruch 12, wobei die dritte Schicht (3)
- eine Stützumrandung bestehend aus einem vulkanisierten Kautschuk oder einem Duroplasten umfasst und in der Stützumrandung eine Mischung vorliegt, wobei die Mischung ein oder mehrere Gase und/oder aus einem Isolationsmaterial bestehende Partikel umfasst, wobei die Stützumrandung bevorzugt eine Dicke von 0 bis 200 µm und/oder eine elektrische Leitfähigkeit von höchsten 10 µS/m aufweist, oder
- als Isolationsmaterial eine Flüssigkeit mit einer Viskosität bei 20 °C im Bereich von 0,1 mPa·s bis 10⁶ mPa·s ist, wobei die Viskosität mittels eines Rotationsviskosimeters gemäß DIN EN ISO 3219 gemessen wurde.

14. Reifen nach einem der vorangehenden Ansprüche, wobei
- die Vorrichtung (6) im Laufstreifen (25) des Reifens (24) angebracht ist und/oder
- die Mittelachse der Vorrichtung (19) in radialer Richtung (16), in axiale Richtung (14) oder in Umlaufrichtung (15) des Reifens (24) verläuft, bevorzugt in axiale Richtung (14) oder in Umlaufrichtung (15) des Reifens (24), besonders bevorzugt in Umlaufrichtung (15) des Reifens (24).

15. Verwendung eines Reifens (24) wie in einem der Ansprüche 1 bis 14 definiert - zum Erzeugen einer elektrischen Spannung im Reifen (24), und/oder
- zum Messen einer mechanischen Kraft (12) entlang der Umlaufrichtung (15) oder der axialen Richtung (14) in einem Reifen (24).

## Claims

1. Tyre comprising a device (6), said device (6) comprising a first, second, third, fourth and fifth layer (1, 2, 3, 4, 5), the third layer (3) being optional,
where a) the first layer (1) comprises a first electrode material,
b) the second layer (2) comprises a first intermediate material,
d) the fourth layer (4) comprises a second intermediate material,
and
e) the fifth layer (5) comprises a second electrode material,
where
- the first intermediate material of the second layer (2) has a dielectric conductivity εᵣ of greater than 1.01 F·m⁻¹
and/or
- the second intermediate material of the fourth layer (4) has a dielectric conductivity eᵣ of greater than 1.01 F·m⁻¹,
**characterized in that**
- the second or fourth layer (2, 4) has a layer thickness in the range from 10 to 1000 µm,
- the first intermediate material of the second layer (2) and the second intermediate material of the fourth layer (4) are different and
- the four layers (1, 2, 4 ,5) or five layers (1, 2, 3, 4 ,5) are arranged one above another according to the above sequence.

2. Tyre according to Claim 1, wherein the device (6)
- comprises means (13) for measuring the voltage between the first and fifth layers (1, 5) or the second and fourth layers (2, 4) of the device (6) and/or
- is suitable for generating an electrical voltage and for electrically charging a battery and/or accumulator attached to a wheel comprising the tyre or attached to the tyre.

3. Tyre according to any of the preceding claims, wherein the second and/or fourth layer (2, 4) has a layer thickness in the range of 10 to 1000 µm, preferably in the range from 30 to 300 µm, particularly preferably in the range from 70 to 160 µm or from 101 to 160 µm, very particularly preferably in the range from 110 to 130 µm.

4. Tyre according to any of the preceding claims, wherein the second and/or fourth layer (2, 4) comprises at least one filler in addition to the second intermediate material.

5. Tyre according to Claim 4, wherein the at least one filler
- in the second layer (2) is carbon black and/or silica,
and/or
- in the fourth layer (4) is carbon black and/or silica.

6. Tyre according to any of the preceding claims, wherein the at least one filler is present
- in the second layer (2)
and/or
- in the fourth layer (4) or
in an amount in the range from 0.1% by weight to 50% by weight, preferably in the range from 1% by weight to 20% by weight, particularly preferably in the range from 1% by weight to 10% by weight, very particularly preferably in the range from 3% by weight to 7% by weight, in each case based on the total mass of the first or fifth layer of the device.

7. Tyre according to any of the preceding claims, wherein
- the first intermediate material of the second layer (2) has a dielectric conductivity εᵣ of greater than 1.1 F·m⁻¹
and/or
- the second intermediate material of the fourth layer (4) has a dielectric conductivity eᵣ of greater than 1.1 F·m⁻¹.

8. Tyre according to any of the preceding claims, wherein the difference between the specific triboelectric affinity of the first intermediate material of the second layer (2) and the specific triboelectric affinity of the second intermediate material of the fourth layer (4) is at least 20 nC/J, measured at 20°C and at 35% relative air humidity.

9. Tyre according to any of the preceding claims, wherein
- the first intermediate material of the second layer (2) comprises a solid material or consists primarily of a solid material selected from the group consisting of polyurethane, a mica, glass, quartz, silk, poly(organo)siloxanes, cellulose and mixtures thereof, and/or
- the second intermediate material of the fourth layer (4) comprises a solid material or consists mainly of a solid material selected from the group consisting of acetate silk, natural or synthetic rubber, polyester, polyethylene, polyethylene terephthalates, polypropylene, polystyrene, polychlorobutadiene, polyacrylonitrile, polyvinylchloride, poly(organo)siloxanes, vulcanized rubber particles, fillers and their mixtures, wherein the natural or synthetic rubbers are preferably the rubbers NR, ENR, BR, SBR, SSBR, PDMS, ESBR and epichlorohydrin rubber.

10. Tyre according to any of the preceding claims, wherein
the second intermediate material of the fourth layer
- comprises epichlorohydrin rubber, preferably GECO,
or
- consists mainly or entirely of epichlorohydrin rubber, preferably GECO, and/or
the first intermediate material of the second layer
- comprises poly(organo)siloxane, preferably PDMS,
or
- consists primarily or entirely of poly(organo)siloxanes, preferably PDMS.

11. Tyre according to any of the preceding claims, wherein the device comprises a third layer (3) between the second and fourth (2, 4) layer and the third layer (3) comprises an insulation material.

12. Tyre according to Claim 11, wherein the third layer (3) includes an insulation material which, at 20°C, has a specific electrical conductivity of less than 10⁻¹ S·cm⁻¹.

13. Tyre according to Claim 11 or Claim 12, wherein the third layer (3)
- comprises a support border consisting of a vulcanized rubber or a thermoset and there is a mixture present in the support border, the mixture comprising one or more gases and/or particles consisting of an insulation material, wherein the support border preferably has a thickness of 0 to 200 µm and/or a maximum electrical conductivity of 10 µS/m, or
- the insulation material is a fluid with a viscosity in the range from 0.1 mPa·s to 10⁶ mPa·s at 20°C, the viscosity being measured by means of a rotational viscometer in accordance with DIN EN ISO 3219.

14. Tyre according to any of the preceding claims, wherein
- the device (6) is mounted in the tread (25) of the tyre (24) and/or
- the centre axis of the device (19) extends in radial direction (16), in axial direction (14) or in circumferential direction (15) of the tyre (24), preferably in axial direction (14) or in circumferential direction (15) of the tyre (24), particularly preferably in circumferential direction (15) of the tyre (24).

15. Use of a tyre (24) as defined in any of Claims 1 to 14
- to generate an electrical voltage in the tyre (24), and/or
- to measure a mechanical force (12) along the circumferential direction (15) or the axial direction (14) in a tyre (24).

## Revendications

1. Pneu comprenant un dispositif (6), le dispositif (6) comprenant une première, une deuxième, une troisième, une quatrième et une cinquième couche (1, 2, 3, 4, 5), la troisième couche (3) étant facultative,
a) la première couche (1) comprenant un premier matériau d'électrode,
b) la deuxième couche (2) comprenant un premier matériau intermédiaire,
d) la quatrième couche (4) comprenant un deuxième matériau intermédiaire,
et
e) la cinquième couche (5) comprenant un deuxième matériau d'électrode,
- le premier matériau intermédiaire de la deuxième couche (2) présentant une conductivité diélectrique εᵣ supérieure à 1,01 F·m⁻¹,
et/ou
- le deuxième matériau intermédiaire de la quatrième couche (4) présentant une conductivité diélectrique eᵣ supérieure à 1,01 F·m⁻¹,
**caractérisé en ce que**
- la deuxième ou la quatrième couche (2, 4) présente une épaisseur de couche dans la plage de 10 à 1 000 µm,
- le premier matériau intermédiaire de la deuxième couche (2) et le deuxième matériau intermédiaire de la quatrième couche (4) sont différents,
- les quatre couches (1, 2, 4, 5) ou les cinq couches (1, 2, 3, 4, 5) sont disposées les unes au-dessus des autres dans l'ordre indiqué ci-dessus.

2. Pneu selon la revendication 1, le dispositif (6)
- comprenant des moyens (13) pour mesurer la tension entre la première et la cinquième couche (1, 5) ou la deuxième et la quatrième couche (2, 4) du dispositif (6) et/ou
- étant adapté pour générer une tension électrique et pour charger électriquement une batterie et/ou un accumulateur monté(e) sur une roue comprenant le pneu ou monté(e) sur le pneu.

3. Pneu selon l'une des revendications précédentes, la deuxième et/ou la quatrième couche (2, 4) présentant une épaisseur de couche dans la plage de 10 à 1 000 µm, de préférence dans la plage de 30 à 300 µm, de manière particulièrement préférée dans la plage de 70 à 160 µm ou de 101 à 160 µm, de manière tout particulièrement préférée dans la plage de 110 à 130 µm.

4. Pneu selon l'une des revendications précédentes, la deuxième et/ou la quatrième couche (2, 4) comprenant, en plus du deuxième matériau intermédiaire, au moins une charge.

5. Pneu selon la revendication 4, l'au moins une charge
- de la deuxième couche (2) étant du noir de carbone et/ou de la silice, et/ou
- de la quatrième couche (4) étant du noir de carbone et/ou de la silice.

6. Pneu selon l'une des revendications précédentes, l'au moins une charge étant présente
- dans la deuxième couche (2)
et/ou
- dans la quatrième couche (4) ou
en une quantité dans la plage de 0,1 % en poids à 50 % en poids, de préférence dans la plage de 1 % en poids à 20 % en poids, de manière particulièrement préférée dans la plage de 1 % en poids à 10 % en poids, de manière tout particulièrement préférée dans la plage de 3 % en poids à 7 % en poids, respectivement par rapport à la masse totale de la première ou de la cinquième couche du dispositif.

7. Pneu selon l'une des revendications précédentes,
- le premier matériau intermédiaire de la deuxième couche (2) présentant une conductivité diélectrique εᵣ supérieure à 1,1 F·m⁻¹,
et/ou
- le deuxième matériau intermédiaire de la quatrième couche (4) présentant une conductivité diélectrique eᵣ supérieure à 1,1 F·m⁻¹.

8. Pneu selon l'une des revendications précédentes, la différence entre l'affinité triboélectrique spécifique du premier matériau intermédiaire de la deuxième couche (2) et l'affinité triboélectrique spécifique du deuxième matériau intermédiaire de la quatrième couche (4) étant d'au moins 20 nC/J, mesurée à 20 °C et à 35 % d'humidité relative de l'air.

9. Pneu selon l'une des revendications précédentes,
- le premier matériau intermédiaire de la deuxième couche (2) comprenant un matériau solide ou étant principalement constitué d'un matériau solide choisi dans le groupe constitué du polyuréthane, d'un mica, du verre, du quartz, de la soie, des poly(organo)siloxanes, de la cellulose et de leurs mélanges, et/ou
- le deuxième matériau intermédiaire de la quatrième couche (4) comprenant un matériau solide ou étant principalement constitué d'un matériau solide choisi dans le groupe constitué de la soie d'acétate, du caoutchouc naturel ou synthétique, du polyester, du polyéthylène, du polyéthylène téréphtalate, du polypropylène, du polystyrène, du polychlorobutadiène, du polyacrilonitrile, du chlorure de polyvinyle, des poly(organo)siloxanes, de particules de caoutchouc vulcanisé, de charges et de leurs mélanges, les caoutchoucs NR, ENR, BR, SBR, SSBR, PDMS, ESBR et le caoutchouc d'épichlorhydrine étant préférés en tant que caoutchouc naturel ou synthétique.

10. Pneu selon l'une des revendications précédentes,
le deuxième matériau intermédiaire de la quatrième couche
- comprenant du caoutchouc d'épichlorhydrine, de préférence du GECO,
ou
- étant constitué principalement ou entièrement de caoutchouc d'épichlorhydrine, de préférence de GECO,
et/ou
le premier matériau intermédiaire de la deuxième couche
- comprenant des poly(organo)siloxanes, de préférence du PDMS,
ou
- étant constitué principalement ou entièrement de poly(organo)siloxanes, de préférence de PDMS.

11. Pneu selon l'une des revendications précédentes, le dispositif comprenant une troisième couche (3) entre les deuxième et quatrième (2, 4) couches et la troisième couche (3) comprenant un matériau isolant.

12. Pneu selon la revendication 11, la troisième couche (3) possédant un matériau isolant, lequel présente une conductivité électrique spécifique inférieure à 10⁻¹ S·cm⁻¹ à 20 °C.

13. Pneu selon la revendication 11 ou la revendication 12, la troisième couche (3)
- comprenant une bordure de support constituée d'un caoutchouc vulcanisé ou d'une résine thermodurcissable et un mélange est présent dans la bordure de support, le mélange comprenant un ou plusieurs gaz et/ou des particules constituées d'un matériau isolant, la bordure de support présentant de préférence une épaisseur de 0 à 200 µm et/ou une conductivité électrique d'au plus 10 µS/m, ou
- en tant que matériau isolant, un liquide ayant une viscosité à 20 °C dans la plage de 0,1 mPa.s à 10⁶ mPa.s, la viscosité ayant été mesurée au moyen d'un viscosimètre rotatif selon DIN EN ISO 3219.

14. Pneu selon l'une des revendications précédentes,
- le dispositif (6) étant monté dans la bande de roulement (25) du pneu (24)
et/ou
- l'axe central du dispositif (19) s'étendant dans la direction radiale (16), dans la direction axiale (14) ou dans la direction circonférentielle (15) du pneu (24), de préférence dans la direction axiale (14) ou dans la direction circonférentielle (15) du pneu (24), de manière particulièrement préférée dans la direction circonférentielle (15) du pneu (24).

15. Utilisation d'un pneu (24) tel que défini dans l'une des revendications 1 à 14
- pour générer une tension électrique dans le pneu (24), et/ou
- pour mesurer une force mécanique (12) le long de la direction circonférentielle (15) ou de la direction axiale (14) dans un pneu (24).
